# EUROPEAN PATENT SPECIFICATION

(11) **EP 2 686 280 B1**
(45) Date of publication and mention of the grant of the patent: **05.06.2024**
(21) Application number: 12711732.3
(22) Date of filing: 15.03.2012
(51) Int. Cl.: C03C 21/00, G02B 27/00, G06F 1/16

(54) **CONTROLLED CHEMICAL STRENGTHENING OF THIN GLASS**
GESTEUERTE CHEMISCHE VERSTÄRKUNG VON DÜNNGLAS
RENFORCEMENT CHIMIQUE CONTRÔLÉ DU VERRE MINCE

(30) Priority: 16.03.2011 US 201161453404 P; 16.03.2011 US 201161453398 P; 16.09.2011 US 201113235036; 16.09.2011 US 201113235090
(43) Date of publication of application: 22.01.2014
(73) Proprietor: Apple Inc., Cupertino CA 95014 (US)
(72) Inventor: WEBER, Douglas, Cupertino, California 95014 (US)
(74) Representative: Rooney, John-Paul
(86) International application number: PCT/US2012/029279
(87) International publication number: WO 2012/125857

(56) References cited:
- WO-A1-00/47529
- WO-A1-2010/019829
- WO-A2-2012/015960
- DE-A1- 10 322 350
- JP-A- 2004 339 019
- JP-A- 2010 116 276
- US-A1- 2011 293 928

## Description

### BACKGROUND OF THE INVENTION

Conventionally, some portable electronic devices use glass as a part of their devices, either internal or external. Externally, a glass part can be provided as part of a housing, such a glass part is often referred to as a cover glass. The transparent and scratch-resistance characteristics of glass make it well suited for such applications. Internally, glass parts can be provided to support display technology. More particularly, for supporting a display, a portable electronic device can provide a display technology layer beneath an outer cover glass. A sensing arrangement can also be provided with or adjacent the display technology layer. By way of example, the display technology layer may include or pertain to a Liquid Crystal Display (LCD) that includes a Liquid Crystal Module (LCM). The LCM generally includes an upper glass sheet and a lower glass sheet that sandwich a liquid crystal layer therebetween. The sensing arrangement may be a touch sensing arrangement such as those used to create a touch screen. For example, a capacitive sensing touch screen can include substantially transparent sensing points or nodes dispersed about a sheet of glass.

Unfortunately, however, use of glass with portable electronic devices requires that the glass be relatively thin. Generally speaking, the thinner the glass the more susceptible the glass is to damage when the portable electronic device is stressed or placed under a significant force. Chemically strengthening has been used to strengthen glass. While chemically strengthening is effective, there is a continuing need to provide improved ways to strengthen glass, namely, thin glass.

JP 2010/116276 A discloses a tempered glass substrate and a method of producing the same. The tempered glass substrate is suitable as a cover glass for a PDA and has a compressive stress layer formed on the end surface of the substrate.

JP 2004/339019 A discloses a tempered glass component having first and second portions of different thicknesses that are chemically strengthened to different levels.

### SUMMARY

The invention provides for a method and consumer electronic product in accordance with the appended claims.

### BRIEF DESCRIPTION OF THE DRAWINGS

The invention will be readily understood by the following detailed description in conjunction with the accompanying drawings, wherein like reference numerals designate like structural elements, and in which:
FIG. 1 illustrates a glass strengthening system according to one example.
FIG. 2 illustrates a glass article according to one example.
FIG. 3 illustrates a glass article according to an example.
FIG. 4 is a cross-sectional diagram of a glass article according to an embodiment.
FIG. 5 is a flow diagram of a glass strengthening process according to one embodiment.
FIGs. 6A-6F illustrate processing to chemically strengthened a glass article.
FIG. 7 is a flow diagram of a glass strengthening process according to another embodiment.
FIGs. 8A-8E illustrate processing to chemically strengthened a glass article.
FIG. 9A is a cross-sectional diagram of a glass cover which has been chemically treated such that a chemically strengthened layer is created according to one example.
FIG. 9B is a cross-sectional diagram of a glass cover which has been chemically treated, as shown to include a chemically treated portion in which potassium ions have been implanted according to one example.
FIG. 10 is a diagrammatic representation of a chemical treatment process that involves submerging a glass cover in an ion bath according to one example.

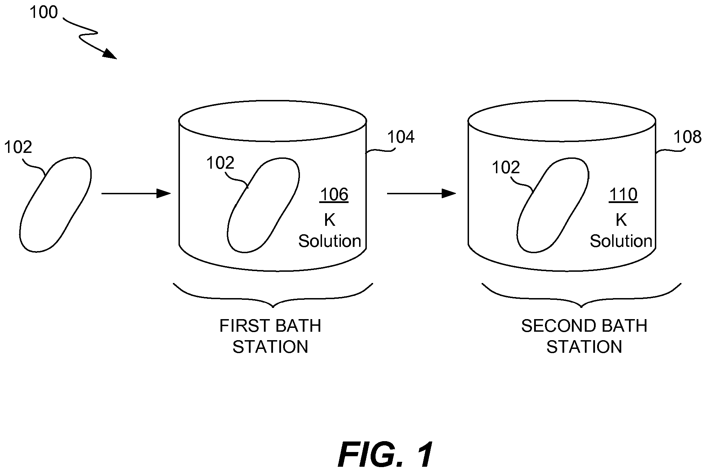

FIGs. 1 1 A and 1 1 B are diagrammatic representations of electronic device according to one embodiment.

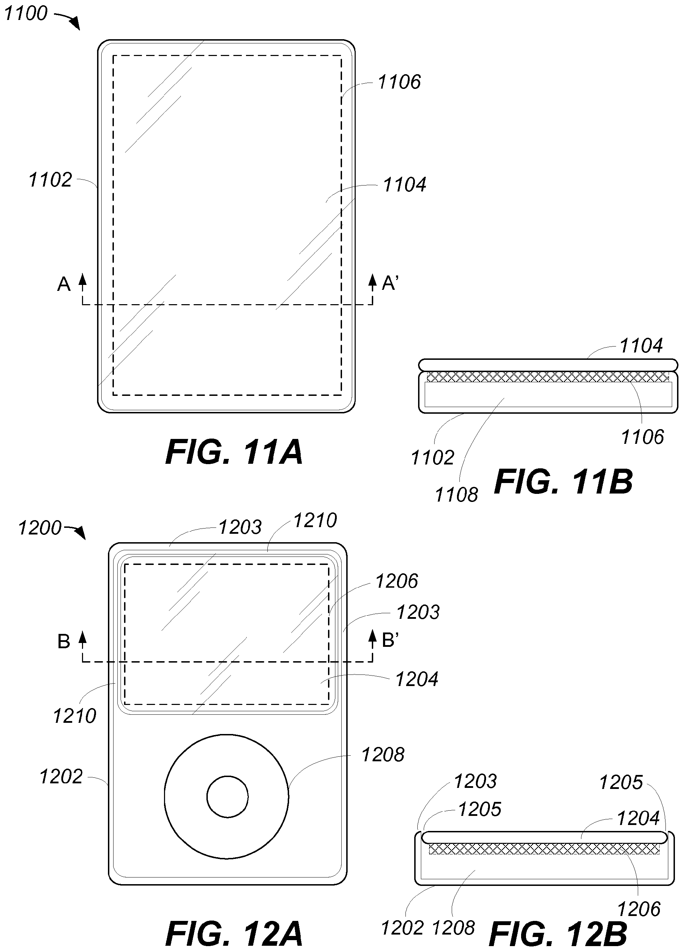

FIGs. 12A and 12B are diagrammatic representations of electronic device according to another embodiment.

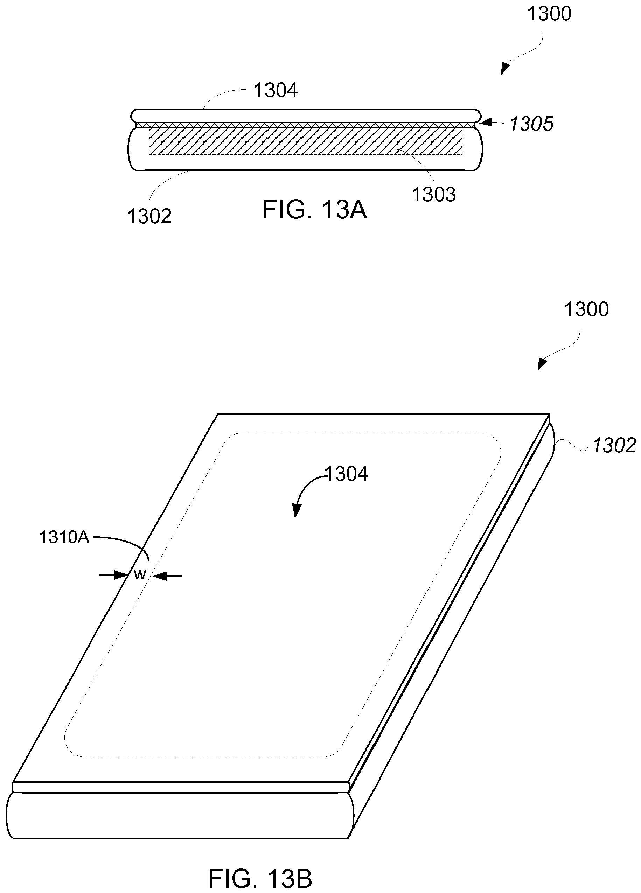

FIGS. 13A and 13B are various views of an electronic device in accordance with one embodiment.

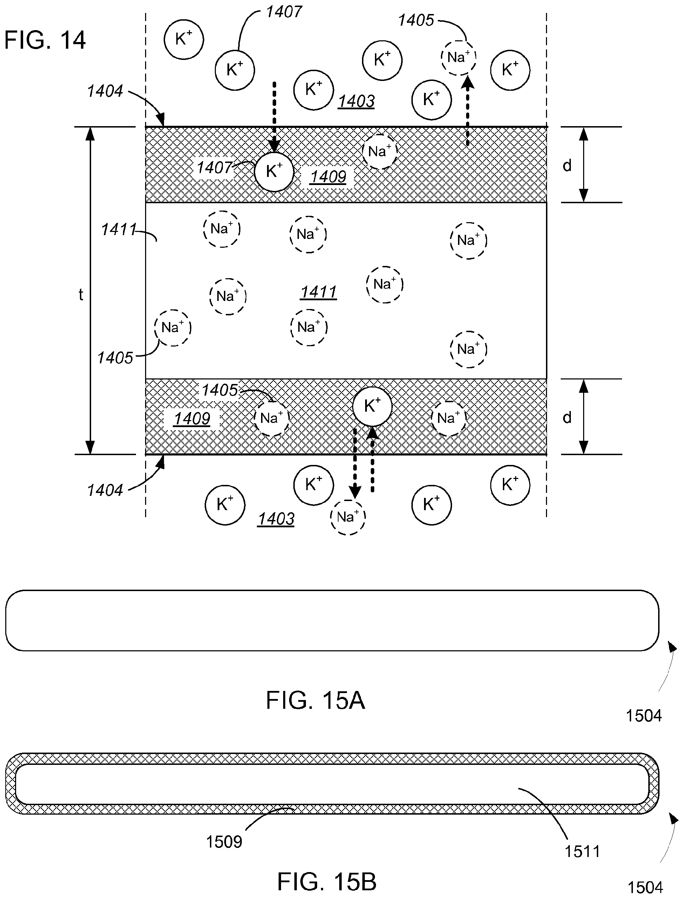

FIG. 14 shows a detailed partial cross sectional view of selective strengthening of exposed surface portions of cover glass.
FIGS. 15A-15E are simplified cross sectional views showing selective strengthening of cover glass in one example.

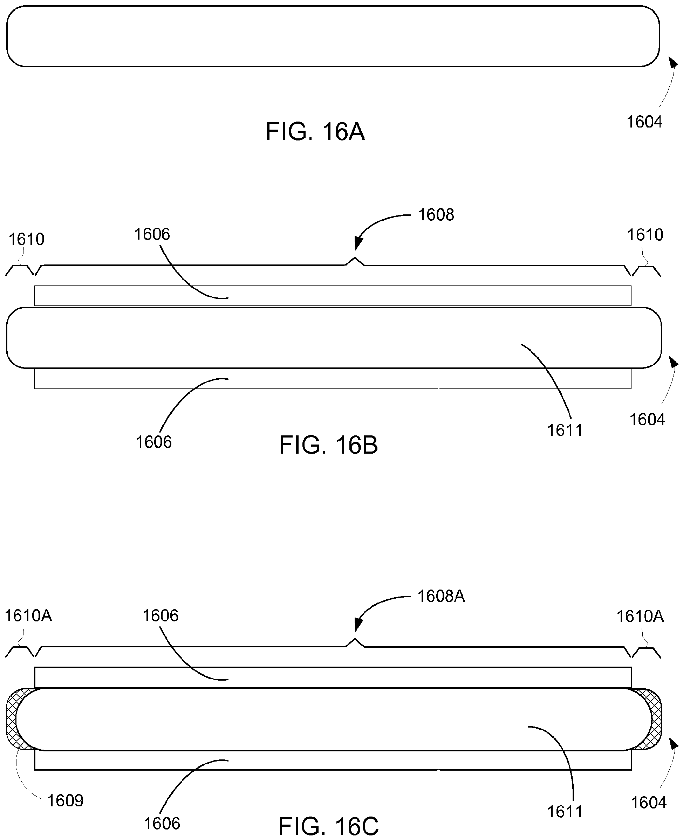

FIGS. 16A-16E are simplified cross sectional views showing selective strengthening of cover glass in another example.

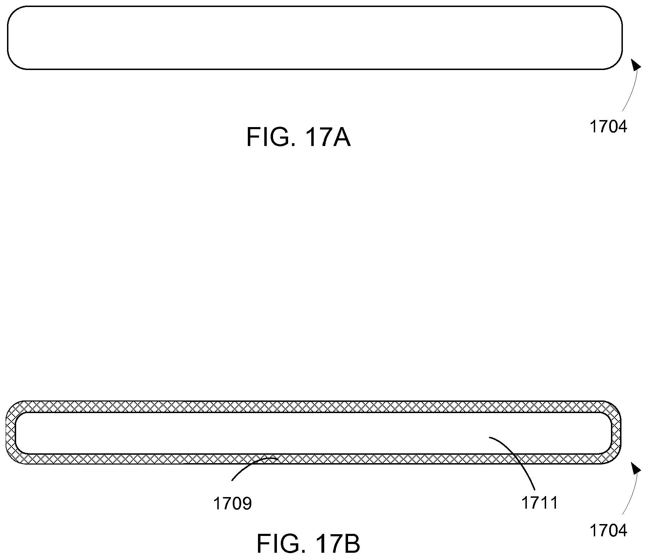

FIGS. 17A-17G are simplified cross sectional views showing selective strengthening of cover glass in yet another example.

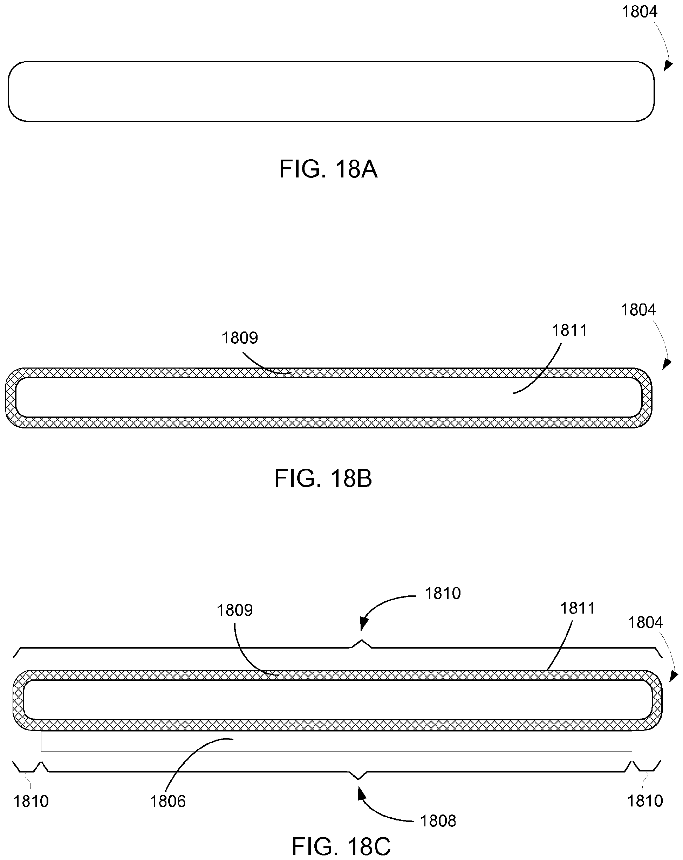

FIGS. 18A-18E are simplified cross sectional views showing selective strengthening of cover glass in still yet another example.

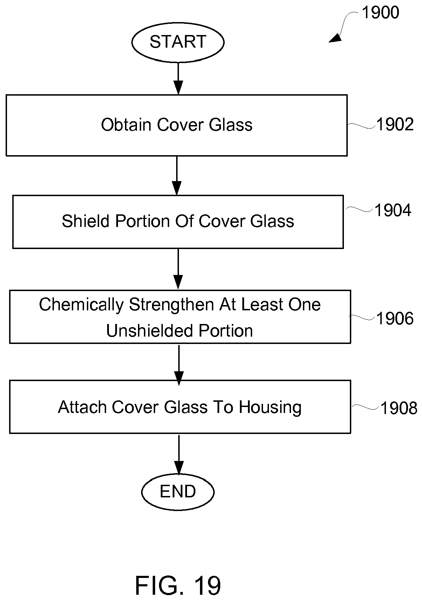

FIG. 19 is a flow diagram showing one example of an assembly process.

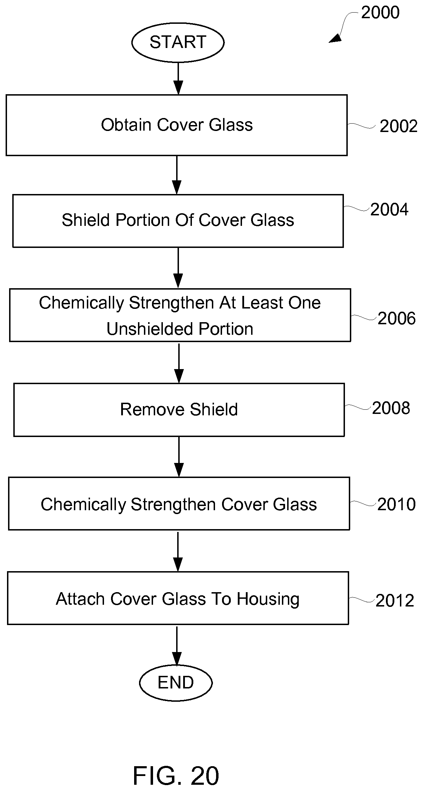

FIG. 20 is a flow diagram showing another example of an assembly process.

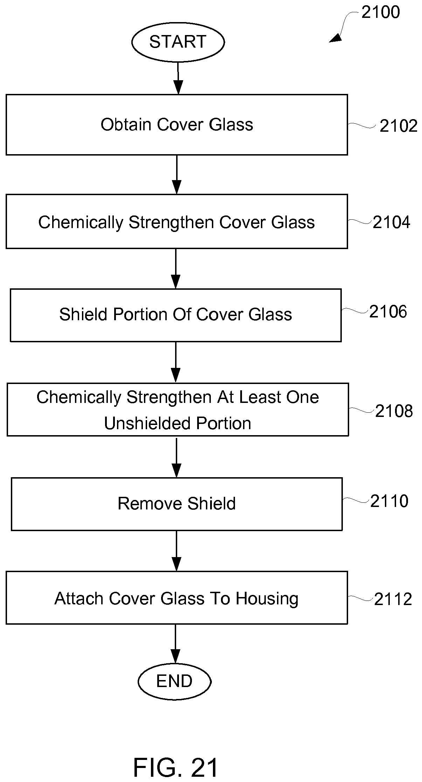

FIG. 21 is a flow diagram showing yet another example of an assembly process.

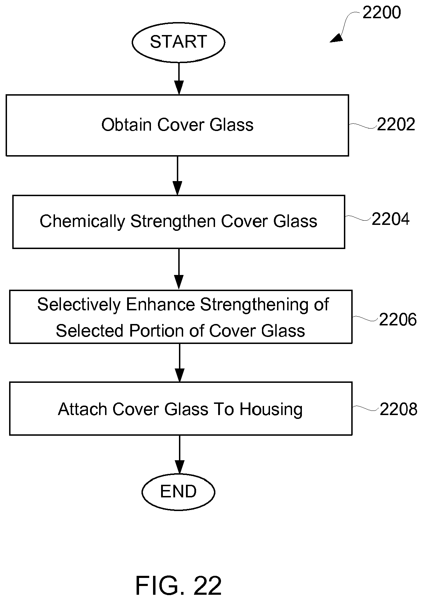

FIG. 22 is a flow diagram showing still another example of an assembly process.

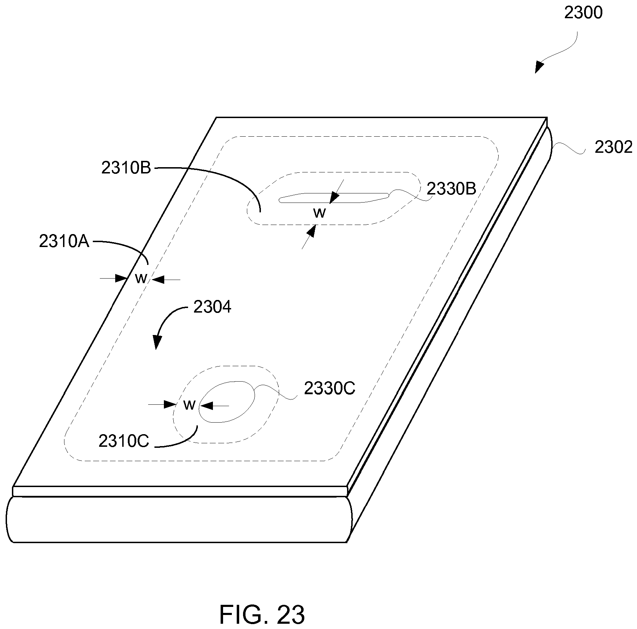

FIG. 23 is a perspective view of an electronic device in accordance with another embodiment.

### DETAILED DESCRIPTION OF EMBODIMENTS OF THE INVENTION

The invention relates generally to increasing the strength of glass.

In one embodiment, techniques are described for selectively strengthening glass articles for electronic devices, namely, portable electronic devices. For example, the glass articles can pertain to cover glass for portable electronic devices, such glass tends to be thin.

In one embodiment, the use of multi-bath chemical processing for a glass article can facilitate controlled chemical strengthening. Through multi-bath (or multi-step) chemical processing, differing levels of strengthening can be achieved for different portion of glass articles. The multi-bath chemical processing can be achieved through the use of successive chemical baths. Accordingly, glass articles that have undergone multi-bath chemical processing are able to be not only thin but also sufficiently strong and resistant to damage. The strengthened glass articles are well suited for use in consumer products, such as consumer electronic devices (e.g., portable electronic devices).

Embodiments of the invention can relate to methods for improving strength of a thin glass member for a consumer product, such as a consumer electronic device, and to the consumer electronic device itself. Unclaimed examples can relate to apparatus and systems for improving the strength of a thin glass member for a consumer product. In one example, the glass member may be an outer surface of a consumer electronic device. For example, the glass member may, for example, correspond to a glass cover that helps form part of a display area of the electronic device (i.e., situated in front of a display either as a separate part or integrated within the display). As another example, the glass member may form a part of a housing for the consumer electronic device (e.g., may form an outer surface other than in the display area). In another embodiment, the glass member may be an inner component of a consumer electronic device. For example, the glass member can be a component glass piece of a LCD display provided internal to the housing of the consumer electronic device.

The apparatus, systems and methods for improving strength of thin glass are especially suitable for glass covers or displays (e.g., LCD displays), particularly those assembled in small form factor electronic devices such as handheld electronic devices (e.g., mobile phones, media players, personal digital assistants, remote controls, etc.). The glass can be thin in these small form factor embodiments, such as less than 3 mm, or more particularly between 0.3 and 2.5 mm. The apparatus, systems and methods can also be used for glass covers or displays for other devices including, but not limited to including, relatively larger form factor electronic devices (e.g., portable computers, tablet computers, displays, monitors, televisions, etc.). The glass can also be thin in these larger form factor embodiments, such as less than 5 mm, or more particularly between 0.3 and 3 mm.

Embodiments of the invention are discussed below with reference to FIGs. 1 - 23. However, those skilled in the art will readily appreciate that the detailed description given herein with respect to these figures is for explanatory purposes as the invention extends beyond these limited embodiments. The illustrations provided in these figures are not necessarily drawn to scale; instead, the illustrations are presented in a manner to facilitate presentation.

FIG. 1 illustrates a glass strengthening system 100 according to one example. The glass strengthening system 100 receives a glass article 102 to be strengthened through chemical processing. The glass article 102 is provided to a first bath station in which a first bath 104 is provided. The glass article 102 can be inserted (e.g., immersed) into the first bath 104 which includes a potassium solution 106. Next, the glass article 102 is removed from the first bath station and provided to a second bath station. The second bath station provides a second bath 108. The glass article can be inserted (e.g., immersed) into the second bath 108 which includes a potassium solution 110. Later, the glass article 102 is removed from the second bath 108. At this point, the glass article has been first enhanced and then strengthened. Through use of the multiple stages of chemical strengthening as well as masking portions of the glass article 102, the chemical strengthening can be controllably induced into the glass article 102.

Furthermore, following removal of the glass article from the second bath 108, post-processing can be performed on the glass article 102. Post-processing can vary widely dependent on intended application for the glass article. However, post-processing can, for example, include one or more of rinsing, polishing, annealing and the like.

The potassium solution 106 within the first bath 104 can be heated to a predetermined temperature, and the glass article 102 can be immersed within the first bath 104 for a predetermined period of time (duration). The degree of chemical strengthening of the glass article 102 is dependent on: (1 ) type of glass, (2) concentration of bath (e.g., K concentration), (3) time in the first bath 104, and (4) temperature of the first bath 104. Likewise, the potassium solution 110 within the second bath 108 can heated to a predetermined temperature, and the glass article 102 can be immersed within the second bath 108 for a predetermined period of time. The degree of chemically strengthening provided by the second bath 108 to the glass article is similarly dependent on: (1 ) type of glass, (2) concentration of bath (e.g., K concentration), (3) time in the second bath 108, and (4) temperature of the second bath 108.

In one implementation, the glass for the glass article 102 can, for example, be alumina silicate glass, soda lime glass or Lithium-based glass. Also, glass from different suppliers, even if the same type of glass, can have different properties and thus may require different values. In one embodiment the first bath 104 and the second bath 108 can be potassium nitrate (KNO3) baths. The time for the glass article 102 to remain immersed in the first bath 104 can, for example, be about 2-20 hours and the temperature for the first bath 104 can be about 350 - 450 degrees Celsius. The time for the glass article 102 to remain immersed in the second bath 108 can, for example, be about 2-20 hours and the temperature for the second bath 108 can be about 350 - 450 degrees Celsius. Also, an electronic field can be induced to assist with the chemical strengthening process, which would lower the duration of time the glass article 102 is to be immersed in an ion exchange bath and/or facilitate enhanced chemical strengthening.

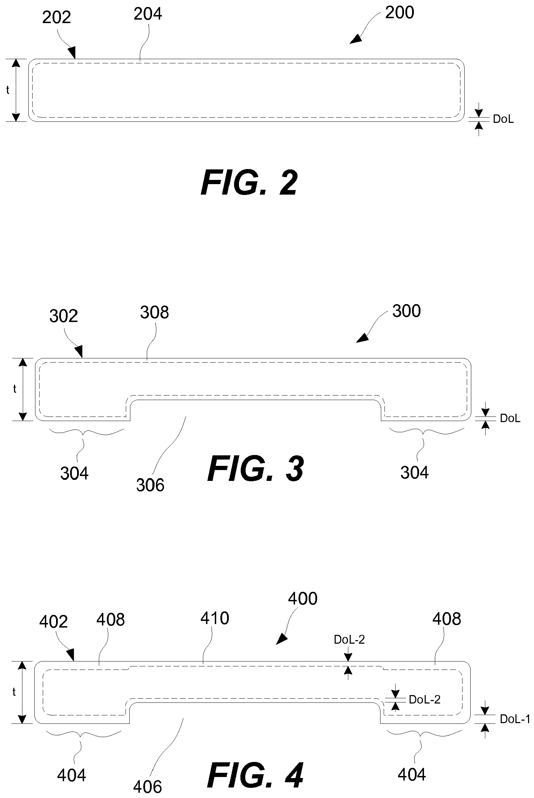

FIG. 2 illustrates a glass article 200 according to one example. The glass article 200 has a uniform thickness (t). Typically, the thickness for the glass article 200 depends on its usage. As an example, if the glass article 200 is destined for use as part of a portable electronic device, the thickness tends to be rather thin, such as on the order of 0.5 to 5.0 mm. The glass article 200 has an outer surface 202. When the glass article 200 is chemically strengthened, such as by placing the glass article 200 in a heated ion bath, ion exchange with other ions present at the outer surface 202 of the glass article. Accordingly, during the chemical strengthening, the ion exchange can be controlled to occur to a determined depth of layer (DoL). The result is an outer strengthened region 204 of the glass article 200. The amount of chemical strengthening and the depth of the depth of layer (DoL) depends on various criteria including thickness of the glass article 200, intended usage of the glass article 200, type of glass, concentration of the ion bath, temperature of the ion bath, and others. As an example, the depth of layer could range from 10-200 urn.

FIG. 3 illustrates a glass article 300 according to another example. The glass article 300 has an outer surface 302 and a variable thickness. Unlike FIG. 2, the glass article 300 has a variable thickness. In particular, the glass article 300 can include side regions 304 and a middle region 306. In the example illustrated in FIG. 3, the middle region 306 has a thickness that is substantially different from a thickness (t) of the side regions 304. For example, the thickness of the middle region 306 can be 20-70% of the thickness (t) of the side regions 304. Typically, the thickness (t) for the glass article 300 depends on its usage. As an example, if the glass article 400 is destined for use as part of a portable electronic device, the thickness tends to be rather thin, such as on the order of 0.3 to 2.0 mm.

Nevertheless, if the glass article 300 is chemically strengthened by placing the glass article 300 in a heated ion bath, ion exchange with other ions at the surface 302 of the glass article can occur. The ion exchange occurs to pay determined depth of layer (DL L). Hence, similar to figure 2, the chemical strengthening serves to strengthen an outer peripheral region 308 of the glass article 300. In this embodiment, the depth of layer (DoL) is generally uniform across the outer periphery of the glass article 300. However, since the middle region 306 has a smaller thickness than do the side regions 304, the depth of layer can be restricted so that the middle region 306 (which is the thinner region) is not placed under too much central tension. Consequently, with respect to the glass article 300, if chemical strengthening is performed in a uniform fashion such as illustrated in FIG. 3, the depth of layer for such chemical strengthening may be unduly limited or not optimized.

FIG. 4 is a cross-sectional diagram of a glass article 400 according to an embodiment. The glass article 400 illustrated in FIG. 4 has an outer surface 402. The glass article 400 has a variable thickness in which side regions 404 are thicker than an inner region 406. In the example illustrated in FIG. 4, the middle region 406 has a thickness that is substantially different from a thickness (t) of the side regions 404. For example, the thickness of the middle region 406 can be 20-70% of the thickness (t) of the side regions 404. Typically, the thickness (t) for the glass article 400 depends on its usage. As an example, if the glass article 300 is destined for use as part of a portable electronic device, the thickness tends to be rather thin, such as on the order of 0.5 to 5.0 mm.

Through chemical strengthening, the glass article 400 can be rendered stronger. Given that the glass article 400 has a variable thickness, the chemical strengthening provided to the different regions can be separately controlled. For example, the chemical strengthening for the different regions can be optimized for its features, characteristics or usage.

In the embodiment illustrated in FIG. 4, the side regions 404 which are thicker than the middle region 406 can be chemically strengthened to a greater extent than the middle region 406. Specifically, as depicted in FIG. 4, the side regions 404 show that a chemical strengthened region 408 is provided to a first depth of layer (DoL-1 ), and the middle region 406 shows that a chemical strengthened region 410 has a second depth of layer (DoL-2). As clearly depicted in FIG. 4, the first depth of layer (DoL-1 ) is greater than the second depth of layer (DoL-2). Since the side regions 404 are thicker regions of the glass article 400, greater amounts of chemical strengthening can be safely provided to the side regions 404. For the middle portion 406, chemical strengthening can be performed, but due to its relative thinness, the amount, level or degree of chemical strengthening can be less than that of the side regions 404.

In one embodiment, the ability to separately control the amount of chemical strengthening provided to different regions of glass article, allows chemical strengthening to be optimized on a per region basis. Consequently, a glass article having variable thickness is chemically strengthened in a manner that optimizes chemical strengthening for each of the distinct regions.

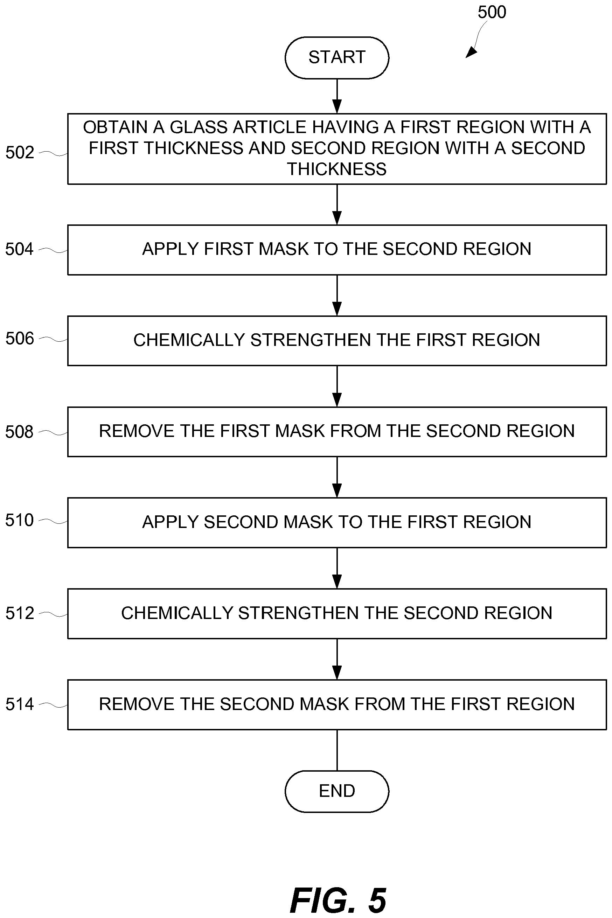

FIG. 5 is a flow diagram of a glass strengthening process 500 according to one embodiment. The glass strengthening process 500 is particularly well-suited for strengthening a glass article that has regions of different thickness. For example, the glass strengthening process 500 can yield the glass article 400 shown in FIG. 4 which has different degree, amount or level of chemically strengthening applied to different regions.

The glass strengthening process 500 initially obtains 502 a glass article that is to be strengthened. The glass article is configured to have a first region with a first thickness and a second region with a second thickness. In other words, the glass article can be considered to have variable thickness.

After the glass article is obtained 502, a first mask can be applied 504 to the second region of the glass article. The glass article can then be chemically strengthened 506. More particularly, the first region of the glass article can be chemically strengthened 506, while the second region is not chemically strengthened. The first mask can serves to inhibit chemical strengthening from being performed with respect to the second region. After the chemical strengthening 506 has concluded, the first mask can be removed 508 from the second region. Then, a second mask can be applied 510 to the first region of the glass article. The second mask can serve to inhibit chemical strengthening from being performed with respect to the first region.

After the second mask has been applied 510, the glass article can again be chemically strengthened 512. At this point, the second region of the glass article is being chemically strengthened 512, while the second mask serves to prevent additional chemical strengthening to the first region of the glass article. After the chemical strengthening 512 has concluded, the second mask can be removed 514 from the first region. Following the removal 514 of the second mask from the first region, the glass strengthening process 500 can end.

Additionally, although not shown, additional post-processing can be performed with respect to the glass member. Still further, the glass article can eventually be used in a consumer electronic device, such as a handheld electronic device where the glass article can form, for example, a portion of said outer housing.

Although the first mask and the second mask can be formed such that chemically strengthening is completely blocked by the mask material, it should be understood that the mask material might only reduce chemical strengthening. The masking material can vary, including a metal layer (e.g., foil), polyimide, and the like. Photolithographic patterning or etching can be used to pattern the mask material. The metal layer can, for example, be aluminum.

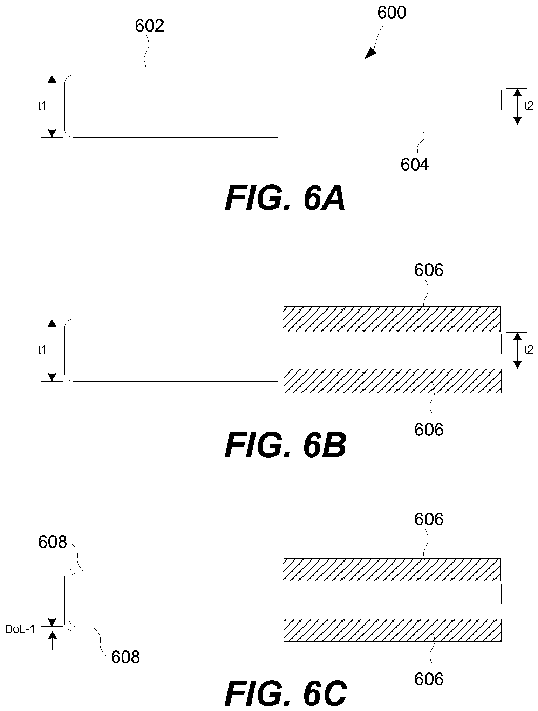

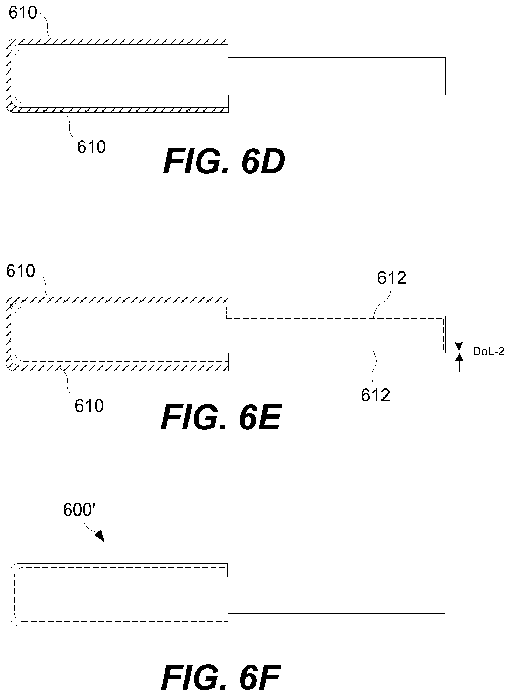

FIGs. 6A-6F illustrate processing to chemically strengthened a glass article 600. The processing can correspond to the glass strengthening process 500 illustrated in FIG. 5. In FIG. 6A, the glass article 600 is shown having a variable thickness. The glass article 600 has a thick region 602 with a thickness t1 , and a thin region 604 having a thickness t2. In FIG. 6B, a mask 606 can then be applied over the thin region 604 of the glass article 600. Then, as illustrated in FIG. 6C, upon placing the glass article 600 with the applied mask 606 into a chemical strengthening bath, a peripheral region 608 of the thick region 602 can be chemically strengthened. The chemical strengthening at the peripheral region 608 has a controlled first depth of layer. Following the chemical strengthening that results in the peripheral region 608 of the thick region 602, the glass article 600 can be removed from the chemical strengthening bath and the mask 606 can be removed. In FIG. 6D, a second mask 610 can be applied to the thick region 602 of the glass article 600. Then, as illustrated in FIG. 6E, upon placing the glass article 600 with the applied second mask 610 into a chemical strengthening bath (which can be the same as the above-described chemical strengthening bath or a new chemical strengthening bath) so that a peripheral region 612 of the thin region 604 can be chemically strengthened. The chemical strengthening of the peripheral region 612 has a second depth of layer. In this example, the second depth of layer is less than the first depth of layer. Following the chemical strengthening that results in the peripheral region 612 of the thin region 604, the glass article 600 can be removed from the chemical strengthening bath and the mask 610 can be removed. Consequently, as shown in FIG. 6F, the resulting glass article 600' represents a strengthened version of the glass article 600 in which the thick region 602 is chemically strengthened to a greater extent than the thin region 604. Advantageously, the different regions of the glass article 600 are able to be chemically strengthened differently for better performance.

Following such chemical strengthening, depending on the type of glass, the glass article 600' having a 1 mm thickness can have a central tension (CT) of about 20-100 MPa (Mega Pascals) at a central portion, the peripheral portion 612 can have a peak compressive stress at the surface 602 of about 300 - 1 100 MPa, and the depth of the compressive layer (i.e., depth of layer) can be about 20-150 microns. As examples, the glass article 600' can be formed of aluminosilicate glass or lithium-aluminosilicate glass. In a more specific embodiment, the glass article 600' having a 1 mm thickness can have a central tension (CT) of about 50-60 MPa (Mega Pascals) at a central portion, the peripheral portion 612 can have a peak compressive stress at the surface 602 of about 700-800 MPa, and the depth of the compressive layer (i.e., depth of layer) can be about 50-60 microns for the thick region 602 and about 30-40 microns for the thin region 604.

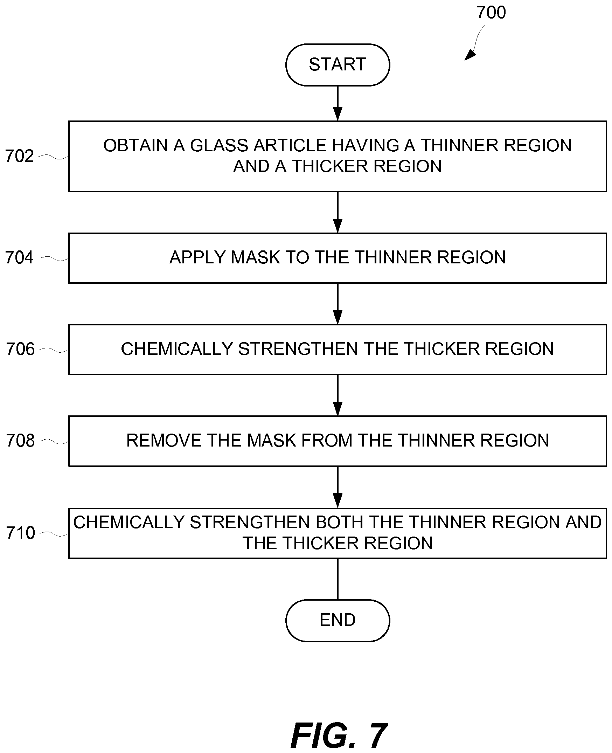

FIG. 7 is a flow diagram of a glass strengthening process 700 according to another embodiment. The glass strengthening process 700 initially obtains 702 a glass article to be chemically strengthened.

The glass strengthening process 700 is particularly well-suited for strengthening a glass article that has regions of different thickness. For example, the glass strengthening process 700 can yield the glass article 400 shown in FIG. 4 which has different degree, amount or level of chemically strengthening applied to different regions.

In this embodiment, the glass article has at least a plurality of distinct regions, with one of the regions corresponding to a thinner region and another of the regions corresponding to a thicker region. Once the glass article has been obtained 702, a mask can be applied 704 to the thinner region. Next, the thicker region of the glass article can be chemically strengthened 706. At this point, the mask that has been applied 704 to the thinner region of the glass article serves to inhibit chemical strengthening of the thinner region. After the chemical strengthening 706 of the thicker region has concluded, the mask can be removed 708 from the thinner region. Thereafter, the glass article, including both the thinner region and the thicker region, can be chemically strengthened 710. Following the chemical strengthening 710, the glass strengthening process 700 can end.

Additionally, although not shown, additional post-processing can be performed with respect to the glass member. Still further, the glass article can eventually be used in a consumer electronic device, such as a handheld electronic device where the glass article can form, for example, a portion of said outer housing.

Although the mask applied 704 to the thinner region can be formed such that chemically strengthening is completely blocked by the mask material. Alternatively, the mask applied 704 to the thicker region can partially block chemical strengthening. The masking material can vary, including a metal layer (e.g., foil), polyimide, and the like. Photolithographic patterning or etching can be used to pattern the mask material. The metal layer can, for example, be aluminum.

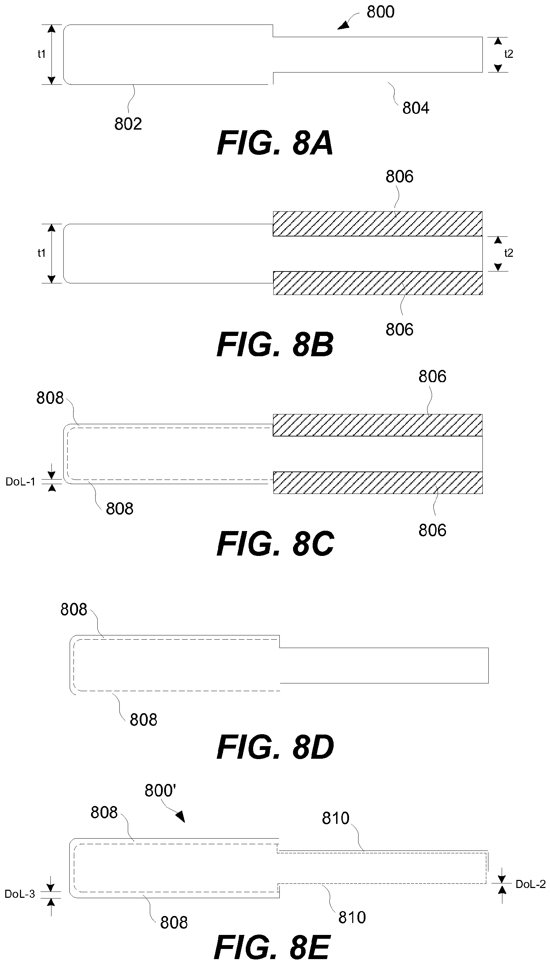

FIGs. 8A-8E illustrate processing to chemically strengthened a glass article 800. The processing can correspond to the glass strengthening process 700 illustrated in FIG. 7. In FIG. 8A, the glass article 800 is shown having a variable thickness. The glass article 800 has a thick region 802 with a thickness t1 , and a thin region 804 having a thickness t2. In FIG. 8B, a mask 806 can then be applied over the thin region 804 of the glass article 800. Then, as illustrated in FIG. 8C, upon placing the glass article 800 with the applied mask 806 into a chemical strengthening bath, a peripheral region 808 of the thick region 802 can be chemically strengthened. The chemical strengthening at the peripheral region 808 has a controlled first depth of layer (DoL-1). Following the chemical strengthening that results in the peripheral region 808 of the thick region 802, the glass article 800 can be removed from the chemical strengthening bath and the mask 806 can be removed. FIG. 8C illustrates the glass article 800 after the chemical strengthening and removal of the mask 806.

Then, as illustrated in FIG. 8E, upon placing the glass article 800 (with no mask applied) into a chemical strengthening bath (which can be the same as the above-described chemical strengthening bath or a new chemical strengthening bath) so that a peripheral region 808 of the thick region 802 as well as a peripheral region 810 of the thin region 804 can be chemically strengthened. The chemical strengthening of the peripheral region 810 following the subsequent chemical strengthening has a second depth of layer (DoL-2). Additionally, the chemical strengthening of the peripheral region 808 can provide further chemical strengthening to the peripheral region 808 of the thick region 802. The chemical strengthening of the peripheral region 808 following the subsequent chemical strengthening has a third depth of layer (DoL-3). In this example, the second depth of layer is less than the third depth of layer. Following the subsequent chemical strengthening that results in the peripheral region 810 of the thin region 804 as well as in the peripheral region 808 of the thick region 802, the glass article 800 can be removed from the chemical strengthening bath. Consequently, as shown in FIG. 8E, the resulting glass article 800' represents a strengthened version of the glass article 800 in which the thick region 802 is chemically strengthened to a greater extent than the thin region 804. Advantageously, the different regions of the glass article 800 are able to be chemically strengthened differently for better performance.

Following such chemical strengthening, depending on the type of glass, the glass article 800' having a 1 mm thickness can have a central tension (CT) of about 20-100 MPa (Mega Pascals) at a central portion, the peripheral portion 808 can have a peak compressive stress at its surface of about 300 - 1 100 MPa, and the depth of the compressive layer (i.e., depth of layer) can be about 20-150 microns. As examples, the glass article 800' can be formed of aluminosilicate glass or lithium-aluminosilicate glass. In a more specific embodiment, the glass article 800' having a 1 mm thickness can have a central tension (CT) of about 50-60 MPa (Mega Pascals) at a central portion, the peripheral portion 808 can have a peak compressive stress at the surface of about 700-800 MPa, and the depth of the compressive layer (i.e., depth of layer) can be about 50-60 microns for the thick region 802 and about 30-40 microns for the thin region 804.

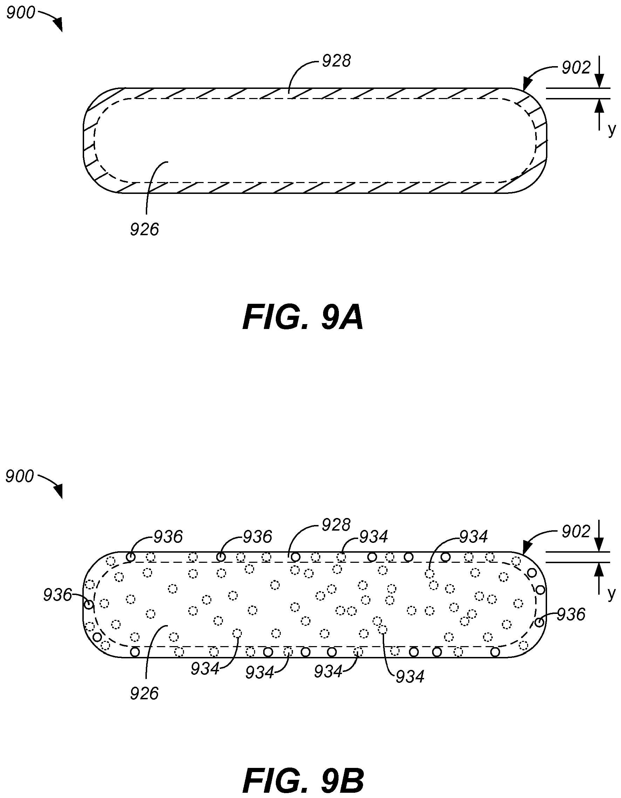

A glass cover which has undergone a chemical strengthening process generally includes a chemically strengthened layer, as previously mentioned. FIG. 9A is a cross-sectional diagram of a glass cover which has been chemically treated such that a chemically strengthened layer is created according to one example. A glass cover 900 includes a chemically strengthened layer 928 and a non-chemically strengthened portion 926. Although the glass cover 900 is, in one embodiment, subjected to chemical strengthening as a whole, the outer surfaces receive the strengthening. The effect of the strengthening is that the non-chemically strengthened portion 926 is in tension, while the chemically strengthened layer 928 is in compression. While glass cover 900 in FIG. 9A is shown as having a rounded edge geometry 902, it should be appreciated that glass cover 900 may generally have any edge geometry, though rounded geometries at edges may allow for increased strengthening of the edges of glass cover 900. Rounded edge geometry 902 is depicted by way of example, and not for purposes of limitation.

FIG. 9B is a cross-sectional diagram of a glass cover which has been chemically treated, as shown to include a chemically treated portion in which potassium ions have been implanted according to one example. Chemically strengthened layer 928 has a thickness (y) which may vary depending upon the requirements of a particular system in which glass cover 900 is to be utilized. Non-chemically strengthened portion 926 generally includes Na⁺ ions 934 but no Alkali metal ions 936. A chemical strengthening process causes chemically strengthened layer 928 to be formed such that chemically strengthened layer 928 includes both Na⁺ ions 934 and Alkali metal ions 936.

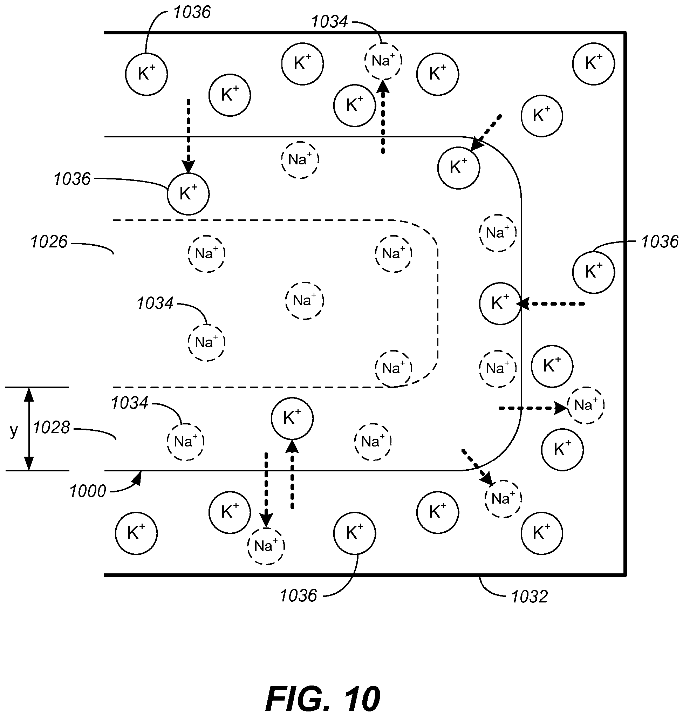

FIG. 10 is a diagrammatic representation of a chemical treatment process that involves submerging a glass cover in an ion bath according to one example. When glass cover 1000, which is partially shown in cross-section, is submerged or soaked in a heated ion bath 1032, diffusion occurs. As shown, Alkali metal ions 1034 (e.g., Sodium (NA)) which are present in glass cover 1000 diffuse into ion bath 1032 while Alkali metal ions 1036 (e.g., potassium (K)) in ion bath 1032 diffuse into glass cover 1000, such that a chemically strengthened layer 1028 is formed. In other words, Alkali metal ions 1036 from ion bath 1032 can be exchanged with Na+ ions 1034 to form chemically strengthened layer 1028. Alkali metal ions 1036 typically would not diffuse into a center portion 1026 of glass cover 1000. By controlling the duration (i.e., time) of a chemical strengthening treatment, temperature and/or the concentration of Alkali metal ions 1036 in ion bath 1032, the thickness (y) of chemically strengthened layer 1028 may be substantially controlled.

The concentration of Alkali metal ions in an ion bath may be varied while a glass cover is soaking in the ion bath. In other words, the concentration of Alkali metal ions in an ion bath may be maintained substantially constant, may be increased, and/or may be decreased while a glass cover is submerged in the ion bath without departing from the spirit or the scope of the present invention. For example, as Alkali metal ions displace Na+ ions in the glass, the Na+ ions become part of the ion bath. Hence, the concentration of Alkali metal ions in the ion bath may change unless additional Alkali metal ions are added into the ion bath.

As previously discussed, glass covers can be used as an outer surface of portions of a housing for electronic devices, such as portable electronic devices. Those portable electronic devices that are small and highly portable can be referred to as handheld electronic devices. A handheld electronic device may, for example, function as a media player, phone, internet browser, email unit or some combination of two or more of such. A handheld electronic device generally includes a housing and a display area.

FIGs. 1 1 A and 1 1 B are diagrammatic representations of electronic device 1 100 according to one embodiment. FIG. 1 1 A illustrates a top view for the electronic device 1 100, and FIG. 1 1 B illustrates a cross-sectional side view for electronic device 1 100 with respect to reference line A-A'. Electronic device 1 100 includes housing 1 102 that has glass cover window 1 104 (glass cover). The glass cover window 1104 may form a top surface of the housing 1102. Cover window 1 104 is primarily transparent so that display assembly 1 106 is visible through cover window 1 104. Cover window 1 104 can be chemically strengthened using the multi-bath chemical processing described herein. Display assembly 1 106 can, for example, be positioned adjacent cover window 1 104. Housing 1 102 also contains internal electrical components besides the display assembly, such as a controller (processor), memory, communications circuitry, etc. Display assembly 1 106 can, for example, include a LCD module. By way of example, display assembly 1 106 may include a Liquid Crystal Display (LCD) that includes a Liquid Crystal Module (LCM). In one embodiment, cover window 1 104 can be integrally formed with the LCM. Housing 1 102 can also include an opening 1 108 for containing the internal electrical components to provide electronic device 1 100 with electronic capabilities. In one example, housing 1 102 need not include a bezel for cover window 1 104. Instead, cover window 1 104 can extend across the top surface of housing 1 102 such that the edges of cover window 1 104 can be aligned (or substantially aligned) with the sides of housing 1 102. The edges of cover window 1 104 can remain exposed. Although the edges of cover window 1 104 can be exposed as shown in FIGs. 1 1 A and 1 1 B, in alternative example, the edges can be further protected. As one example, the edges of cover window 1 104 can be recessed (horizontally or vertically) from the outer sides of housing 1 102. As another example, the edges of cover window 1 104 can be protected by additional material placed around or adjacent the edges of cover window 1 104.

Cover window 1 104 may generally be arranged or embodied in a variety of ways. By way of example, cover window 1 104 may be configured as a protective glass piece that is positioned over an underlying display (e.g., display assembly 1 106) such as a flat panel display (e.g., LCD) or touch screen display (e.g., LCD and a touch layer). Alternatively, cover window 1 104 may effectively be integrated with a display, i.e., glass window may be formed as at least a portion of a display. Additionally, cover window 1 104 may be substantially integrated with a touch sensing device such as a touch layer associated with a touch screen. In some cases, cover window 1 104 can serve as the outer most layer of the display.

FIGs. 12A and 12B are diagrammatic representations of electronic device 1200 according to another embodiment. FIG. 12A illustrates a top view for electronic device 1200, and FIG. 12B illustrates a cross-sectional side view for electronic device 1200 with respect to reference line B-B'. Electronic device 1200 includes housing 1202 that has glass cover window 1204 (glass cover). The glass cover window 1204 may form a top surface of the housing 1202. In this example, cover window 1204 can be protected by side surfaces 1203 of housing 1202. Here, cover window 1204 does not fully extend across the top surface of housing 1202; however, the top surface of side surfaces 1203 can be adjacent to and aligned vertically with the outer surface of cover window 1204. Since the edges of cover window 1204 can be rounded for enhanced strength, there may be gaps 1205 that are present between side surfaces 1203 and the peripheral edges of cover window 1204. Gaps 1205 are typically very small given that the thickness of cover window 1204 is thin (e.g., less than 3 mm). However, if desired, gaps 1205 can be filled by a material. The material can be plastic, rubber, metal, etc. The material can conform in gap 1205 to render the entire front surface of electronic device 1200 flush, even across gaps 1205 proximate the peripheral edges of cover window 1204. The material filling gaps 1205 can be compliant. The material placed in gaps 1205 can implement a gasket. By filling the gaps 1205, otherwise probably undesired gaps in the housing 1202 can be filled or sealed to prevent contamination (e.g., dirt, water) forming in the gaps 1205. Although side surfaces 1203 can be integral with housing 1202, side surface 1203 could alternatively be separate from housing 1202 and, for example, operate as a bezel for cover window 1204.

Cover window 1204 is primarily transparent so that display assembly 1206 is visible through cover window 1204. Display assembly 1206 can, for example, be positioned adjacent cover window 1204. Housing 1202 also contains internal electrical components besides the display assembly, such as a controller (processor), memory, communications circuitry, etc. Display assembly 1206 can, for example, include a LCD module. By way of example, display assembly 1206 may include a Liquid Crystal Display (LCD) that includes a Liquid Crystal Module (LCM). In one example, cover window 1204 is integrally formed with the LCM. Housing 1202 can also include an opening 1208 for containing the internal electrical components to provide electronic device 1200 with electronic capabilities.

The front surface of electronic device 1200 can also include user interface control 1208 (e.g., click wheel control). In this example, cover window 1204 does not cover the entire front surface of electronic device 1200. Electronic device 1200 essentially includes a partial display area that covers a portion of the front surface.

Cover window 1204 may generally be arranged or embodied in a variety of ways. By way of example, cover window 1204 may be configured as a protective glass piece that is positioned over an underlying display (e.g., display assembly 1206) such as a flat panel display (e.g., LCD) or touch screen display (e.g., LCD and a touch layer). Alternatively, cover window 1204 may effectively be integrated with a display, i.e., glass window may be formed as at least a portion of a display. Additionally, cover window 1204 may be substantially integrated with a touch sensing device such as a touch layer associated with a touch screen. In some cases, cover window 1204 can serve as the outer most layer of the display.

FIGS. 13A and 13B are various views of an electronic device 1300 in accordance with one embodiment. The electronic device 1300 may, for example, be embodied as portable or handheld electronic device having a thin form factor (or low profile). The electronic device 1300 can, for example, correspond to a media player, a media storage device, a Portable Digital Assistant (PDA), a tablet PCs, a computer, a cellular phone, a smart phone, a GPS unit, a remote control, and the like.

As shown in cross sectional view in FIG. 13A, the electronic device 1300 includes housing 1302. Housing 1302 may serve as the outer surface for the electronic device 1300. Electrical components 1303 are disposed within the housing 1302. The electrical components may include, but are not limited to, a controller (or processor), memory, battery, display, camera, and illuminator such as a flash.

Additionally, the electronic device 1300 has a cover glass 1304. The cover glass 1304 may serve as an external surface, i.e., top surface, for the electronic device 1300. The cover glass 1304 may also resist scratching and therefore may provide a substantially scratch-resistance surface for the top surface of the housing 1302 for the electronic device 1300. The cover glass 1304 may be coupled to the housing 1302, for example, using an adhesive 1305.

The electronic device 1300 is shown in perspective view in FIG. 13B. Cover glass 1304 may be provided over a display area. The cover glass 1304 may be substantially transparent so that the display area can be viewed through the cover glass 1304. The display area may be disposed within the housing 1302 of the electronic device 1300. The electronic device 1300 may include a full view or substantially full view display area that consumes a majority of the front surface of the electronic device 1300. The display area may be embodied in a variety of ways. In one example, the display area may comprise at least a display such as a flat panel display and more particularly an LCD display.

The display area may alternatively or additionally include a touch sensing device positioned over a display screen. For example, the display area may include one or more glass layers having capacitive sensing points distributed thereon. Each of these components may be separate layers or they may be integrated into one or more stacks. In one example, the cover glass 1304 may act as the outer most layer of the display area. The adhesive 1305 can be translucent and extend around the periphery so as to not optically interfere with the display area.

The electronic device 1300 may include a display region (e.g., the display area) that includes various layers. The various layers may include at least a display, and may additionally include a sensing arrangement disposed over the display. In some cases, the layers may be stacked and adjacent one another, and may even be laminated thereby forming a single unit. In other cases, at least some of the layers are spatially separated and not directly adjacent.

For example, the sensing arrangement may be disposed above the display such that there is a gap there between. By way of example, the display may include a Liquid Crystal Display (LCD) that includes a Liquid Crystal Module (LCM). The LCM generally includes at least an upper glass sheet and a lower glass sheet that at least partially sandwich a liquid crystal layer there between. The sensing arrangement may be a touch sensing arrangement such as those used to create a touch screen.

For example, a capacitive sensing touch screen may include substantially transparent sensing points or nodes dispersed about cover glass 1304. The cover glass 1304 may serve as the outer protective barrier for the display region. Typically, the cover glass 1304 may be adjacent to the display region, but may also be integrated with the display region, such as another layer (outer protective layer).

As shown in FIG. 13B, the cover glass 1304 may extend across the entire top surface of the housing 1302. In such a case, the edges of the cover glass 1304 may be aligned, or substantially aligned, with the sides of the housing 1302. Given that the thickness of the cover glass 1304 may be rather thin (i.e., less than a few millimeters), the glass material for the cover glass 1304 can be selected from available glass that is stronger. For example, alumino silicate glass (e.g., DVTS from Corning) is one suitable choice for the glass material for the cover glass 1304. Other examples of glass materials include, but are not limited to including, sodalime, borosilicate, and the like. Still another example of glass material may be lithium based glass. Additionally, the edges of the cover glass 1304 can be configured to correspond to a particular predetermined geometry. By machining the edges of the cover glass 1304 to correspond to the particular predetermined geometry, the cover glass pieces can become stronger. For additional information about use of predetermined geometries, see U.S. Provisional Patent Application No. 61 /156,803, filed March 2, 2009 and entitled "Techniques for Strengthening Glass Covers for Portable Electronic Devices", which hereby incorporated herein by reference in its entirety.

Moreover, as will be discussed in greater detail subsequently herein, the cover glass 1304 is selectively chemically treated for further strengthening. One suitable chemical treatment is to selectively expose one or more surface portions of the cover glass in a chemical bath containing potassium (e.g., KNO3) for a period of time (e.g., several hours) at an elevated temperature. Additionally, baths containing sodium may be used in conjunction with Lithium baths, as this combination may produce a compressive stress layer. In any case, the selective chemical treatment can desirably result in higher compression stresses at the selectively exposed surface portions of the cover glass pieces. The higher compression stresses may be the result ion exchange wherein K+ ions effectively replacing some Na+ ions at or near the selectively exposed surface portions of the cover glass.

As particularly shown in FIG. 13B, a selectively chemically strengthened surface region 131 OA may comprise a selectively strengthened edge extremity 131 OA of the cover glass. The selectively chemically strengthened surface region 131 OA may have a width dimension, w, extending inwardly from peripheral edges of the cover glass. In other words, the selectively strengthened edge extremity 131 OA may have a width dimension, w. The width dimension may be about two to five millimeters, or more. For example the width dimension may be about ten millimeters. A notional dashed line in FIG. 13B representatively illustrates an inner extent of the selectively chemically strengthened surface region 131 OA.

The apparatus, systems and methods according to embodiments described herein are especially suitable for cover glasses or displays (e.g., LCD displays) assembled in small form factor electronic devices such as handheld electronic devices (e.g., mobile phones, media players, personal digital assistants, remote controls, etc.) The apparatus, systems and methods can also be used for cover glasses or displays for other relatively larger form factor electronic devices (e.g., portable computers, tablet computers, displays, monitors, televisions, etc.).

In one example, the size of a glass cover depends on the size of the associated electronic device. For example, with handheld electronic devices, the glass cover is often not more than five (5) inches diagonal. As another example, for portable electronic devices, such as smaller portable computers or tablet computers, the glass cover is often between four (4) to twelve (12) inches diagonal. As still another example, for portable electronic devices, such as full size portable computers, displays or monitors, the glass cover is often between ten (10) to twenty (20) inches diagonal or even larger. The glass cover is typically rather thin, such as having a thickness less than about 5 mm, or more specifically less than about 3 mm, or more specifically less than about 1 mm.

FIG. 14 shows a detailed partial cross sectional view of selective strengthening of exposed surface portions of cover glass 1404. FIG. 14 diagrammatically illustrates a chemical treatment process of submerging the cover glass 1404 in a heated potassium bath 1403 (for example a molten KNO3 bath), for selective chemically strengthening the cover glass 1404. For example, the potassium bath may be heated to between about three-hundred and eighty degrees Celsius, and about four-hundred and fifty degrees Celsius. When the cover glass 1404 is submerged or soaked in the heated potassium bath 1403, diffusion and ion exchange can occur at exposed surface portions of the cover glass 1404. Ion exchange may be inhibited in masked areas where corresponding surface portions of the cover glass are not exposed to the chemical bath.

As shown in FIG. 14, Na+ ions 1405 which are present in cover glass 1404 can diffuse into potassium bath 1403, while K+ ions 1407 in potassium bath 1403 can diffuse into cover glass 1404 such that a compressive surface layer 1409 can be formed. In other words, K+ ions 1407 from potassium bath 1403 can be exchanged with Na+ ions 1405 to form compressive surface layer 1409. The K+ ions 1407 can provide a compressive stress surface stress (CS) of the compressive surface layer 1409, which chemically strengthens the compressive surface layer 1409 of the cover glass 1404.

Cover glass 1404 is shown in FIG. 14 as having a thickness (t). By controlling chemical treatment parameters such as the length of time of chemical strengthening treatment and/or the concentration of K+ ions 1407 in potassium bath 1403, a depth (d) of compressive surface layer 1409 and compressive stress surface stress (CS) of the compressive surface layer 1409 may be substantially controlled. Depth of ion exchange (d) may be controlled in various ways for various cover glass thicknesses, for example by using high ion concentrations and/or bath temperatures and/or extended bath soak times, and/or by using applied electric fields to enhance diffusion. For example, bath soak time by be about six hours. In FIG. 14, the compressive surface layer 1409 undergoing ion exchange is shown using cross hatching.

In some cases, K+ ions 1407 may not diffuse into a center portion 141 1 of cover glass 1404. In FIG. 14 the center portion 141 1 is shown without cross hatching. The central portion 141 1 of the cover glass 1404 can have a central tension (CT) in response to the compressive stress surface stress (CS) of the compressive surface layer 1409.

As mentioned previously herein, ion exchange may be inhibited in masked areas where corresponding surface portions of the cover glass are not exposed to the chemical bath. Foil can, for example, be used for masking. Further, photolithographic patterning of ion exchange (selective chemical strengthening) of the cover glass may be done by photolithographically patterning masks thereon. In such case, photosensitive polyimide may be used for masking; or an applied over layer of aluminum (which may be applied by sputtering) may be photolithographically patterned into a patterned mask using photoresist and etching of the aluminum.

FIGS. 15A-15E are simplified cross sectional views showing selective strengthening of cover glass in one example. FIG. 15A shows cover glass 1504 prior to a first strengthening treatment. FIG. 15B shows a cover glass 1504 after the first strengthening treatment, such as treatment in a first heated potassium bath for a first period of time as discussed previously herein.

In FIGS. 15B-15E compressive surface layer 1509 from undergoing ion exchange is shown using cross hatching. Compressive surface layer 1509 can have a corresponding depth of compressive layer. In some cases, potassium ions may not diffuse into a center portion 151 1 of cover glass 1504. In FIG. 15B the center portion 151 1 is shown without cross hatching. The central portion 151 1 of the cover glass 1504 can have a central tension (CT) in response to the compressive stress surface stress (CS) of the compressive surface layer 1509. For example, hypothetical^ speaking, the following is theorized with respect to possible effects of the first strengthening treatment: the compressive surface layer 1509 may have a peak compressive stress of about seven hundred and thirty Mega Pascals (730 Mega Pascals), and a depth of compressive layer of about thirty eight point six microns (38.6 microns); and the central portion 1511 may have a central tension of about fifty-four Mega Pascals (54 Mega Pascals.)

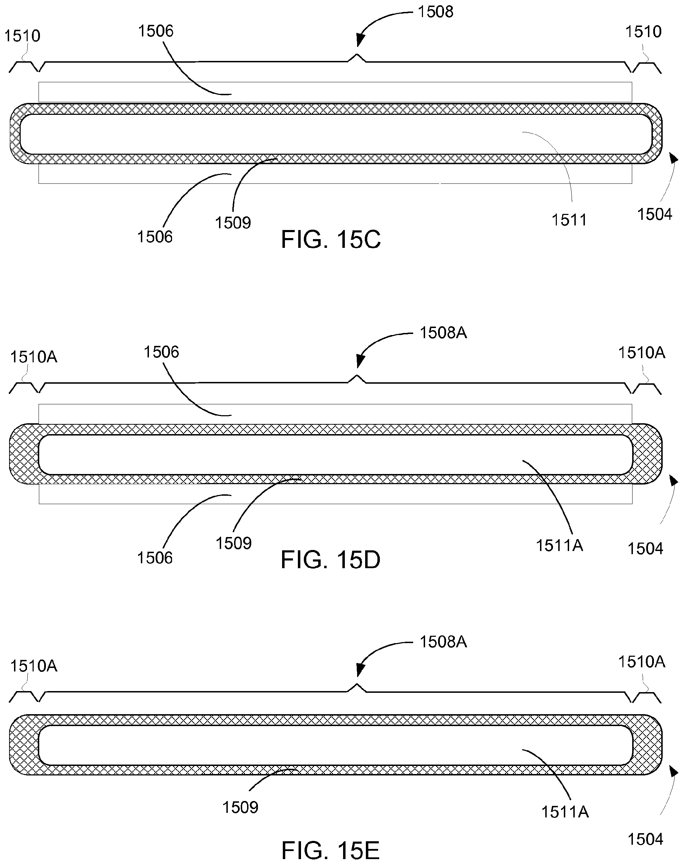

FIG. 15C shows shielding 1506 of a portion of the cover glass 1504, the shielding 1506 providing the cover glass 1504 with at least one shielded portion 1508 and at least one unshielded portion 1510. Suitable masking 1506 of the cover glass, as discussed previously herein, may be used for the shielding 1506 of the cover glass 1504. For example, as shown in FIG. 15C opposing major surfaces of the cover glass may be shielded by applied mask material 1506, so as to provide the shielded portion 1508 of the cover glass. Edge extremities 1510 of the cover glass 1504 may be unshielded portions 1510. Mask 1506 may be suitably patterned as desired for shielded portion 1508 and unshielded portion 1510. For example, unshielded portion 1510 may have a width dimension of about two to about five millimeters, or more. For example the width dimension may be about ten millimeters.

FIG. 15D shows cover glass 1504 after a second strengthening treatment, such as treatment in a second heated potassium bath for a second period of time as discussed previously herein. Strengthening of a selected unshielded portion 151 OA of the cover glass can be selectively enhanced by the second strengthening treatment. Because it is unshielded, unshielded portion 151 OA may be substantially affected by the second strengthening treatment, so as to provide a selectively chemically strengthened surface region 151 OA. Conversely, because it is shielded, shielded portion 1508A of the other chemically strengthened surface region 1508A may be substantially unaffected by the second strengthening treatment. Accordingly, the selectively chemically strengthened surface region 151 OA of the cover glass may have enhanced strengthening that is greater than strengthening of the other chemically strengthened surface region 1508A. In light of the foregoing, it should be understood that the selectively chemically strengthened surface region 151 OA of the cover glass may be strengthened differently than the other chemically strengthened surface region 1508A. After the second strengthening treatment, the shielding 1506 may be removed as shown in FIG. 15E.

In FIGS. 15D and 15E, the selectively chemically strengthened surface region 151 OA of the cover glass may have enhanced strengthening with an enhanced depth of compressive layer that is deeper than the depth of compressive layer of the other chemically strengthened surface region 1508A. For example, hypothetical^ speaking, it is theorized that the enhanced depth of compressive layer of the selectively chemically strengthened surface region 151 OA may be about one hundred microns, while the depth of compressive layer of the other chemically strengthened surface region 1508A may be about thirty eight point six microns.

Comparing FIG. 15C to FIG. 15D for illustration of the effects of the second strengthening treatment, the enhanced, deeper depth of compressive layer of the selectively chemically strengthened surface region 151 OA is highlighted with expanded cross hatching in the selectively chemically strengthened surface region 151 OA. Similarly, a modified central region 151 1 A in FIG. 15D is depicted as smaller, relative to corresponding central region 151 1 in FIG. 15C. Of course, it should be understood that since depth of compressive layer differences may be on the order of tens of microns, differences between FIGS. 15C and 15D may be shown as greatly exaggerated for ease of illustration.

Furthermore, it should be understood that the selectively chemically strengthened surface region 151 OA of the cover glass may have enhanced strengthening, with an enhanced compressive stress that is greater than compressive stress of the other chemically strengthened surface region 1508A. For example, hypothetically speaking, it is theorized that the two regions 151 OA, 1508A may have similar peak compressive stress of about seven hundred and thirty Mega Pascals. However, because of the aforementioned deeper depth of compressive layer, the selectively chemically strengthened surface region 151 OA of the cover glass may have total accumulated compressive stress that is greater than corresponding total accumulated compressive stress of the other chemically strengthened surface region 1508A.

Moreover, the selectively chemically strengthened surface region 151 OA of the cover glass may have enhanced strengthening, with an enhanced central tension that is greater than central tension of the other chemically strengthened surface region 1508A. For example, hypothetically speaking, it is theorized that the enhanced central tension of the selectively chemically strengthened surface region 151 OA may be about ninety-one Mega Pascals, while the central tension of the other chemically strengthened surface region 1508A may be about fifty-one Mega Pascals.

FIGS. 16A-16E are simplified cross sectional views showing selective strengthening of cover glass in another example. FIG. 16A shows cover glass 1604 prior to a first strengthening treatment. Prior to the first strengthening treatment, FIG. 16B shows shielding 1606 of a portion of the cover glass 1604, the shielding 1606 providing the cover glass 1604 with at least one shielded portion 1608 and at least one unshielded portion 1610. Suitable masking 1606 of the cover glass, as discussed previously herein, may be used for the shielding 1606 of the cover glass 1604. For example, as shown in FIG. 16B opposing major surfaces of the cover glass may be shielded by applied mask material 1606, so as to provide the shielded portion 1608 of the cover glass. Edge extremities 1610 of the cover glass 1604 may be unshielded portions 1610. Mask 1606 may be suitably patterned as desired for shielded portion 1608 and unshielded portion 1610.

FIG. 16C shows a cover glass 1604 after the first strengthening treatment, such as treatment in a first heated potassium bath for a first period of time as discussed previously herein. Compressive surface layer 1609 from undergoing ion exchange in unshielded portion 161 OA is shown using cross hatching. In some cases, potassium ions may not diffuse into a center portion 161 1 of cover glass 1604. In FIG. 16C the center portion 161 1 is shown without cross hatching.

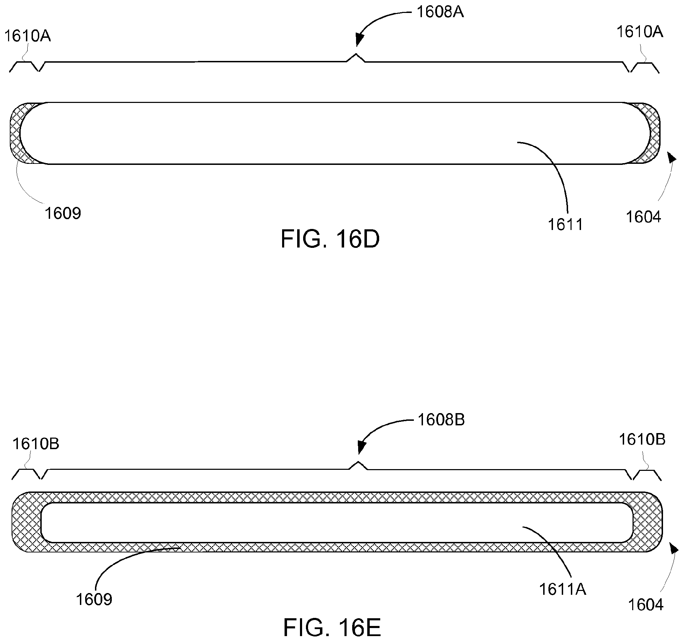

Because it is unshielded, unshielded portion 161 OA may be substantially affected by the first strengthening treatment. Conversely, because it is shielded, shielded portion 1608A may be substantially unaffected by the first strengthening treatment. After the first strengthening treatment, the shielding 1606 may be removed as shown in FIG. 16D.

FIG. 16E shows cover glass 1604 after a second strengthening treatment, such as treatment in a second heated potassium bath for a second period of time as discussed previously herein. Because it has already undergone the first strengthening treatment, selectively chemically strengthened surface region 161 OB may be substantially affected by the second strengthening treatment. In particular, strengthening of selectively chemically strengthened surface region 161 OB can be selectively enhanced by the second strengthening treatment. However, it should be understood that because it was previously shielded, the other chemically strengthened surface region 1608B may not have been affected by the first chemical strengthening treatment, and may show relatively less effect after the second strengthening treatment. Accordingly, the selectively chemically strengthened surface region 161 OB of the cover glass may have enhanced strengthening that is greater than strengthening of the other chemically strengthened surface region 1608B. In light of the foregoing, it should be understood that the selectively chemically strengthened surface region 161 OB of the cover glass may be strengthened differently than the other chemically strengthened surface region 1608B.

In FIGS. 16D and 16E, the selectively chemically strengthened surface region 161 OB of the cover glass may have enhanced strengthening with an enhanced depth of compressive layer that is deeper than the depth of compressive layer of the other chemically strengthened surface region 1608B. Comparing FIG. 16D to FIG. 16E for illustration of the effects of the second strengthening treatment, the enhanced, deeper depth of compressive layer of the selectively chemically strengthened surface region 161 OB is highlighted with expanded cross hatching in the selectively chemically strengthened surface region 161 OB. Similarly, a modified central region 161 1 A in FIG. 16E is depicted as smaller, relative to corresponding central region 161 1 in FIG. 16D.

Furthermore, it should be understood that the selectively chemically strengthened surface region 1610B of the cover glass may have enhanced strengthening, with an enhanced compressive stress that is greater than compressive stress of the other chemically strengthened surface region 1608B. Moreover, the selectively chemically strengthened surface region 1610B of the cover glass may have enhanced strengthening, with an enhanced central tension that is greater than central tension of the other chemically strengthened surface region 1608B.

FIGS. 17A-17G are simplified cross sectional views showing selective strengthening of cover glass in yet another example. FIG. 17A shows cover glass 1704 prior to a first strengthening treatment. FIG. 17B shows a cover glass 1704 after the first strengthening treatment, such as treatment in a first heated potassium bath for a first period of time as discussed previously herein. Compressive surface layer 1709 from undergoing ion exchange is shown using cross hatching. Compressive surface layer 1709 can have a corresponding depth of compressive layer. In some cases, potassium ions may not diffuse into a center portion 171 1 of cover glass 1704. In FIG. 17B the center portion 171 1 is shown without cross hatching.

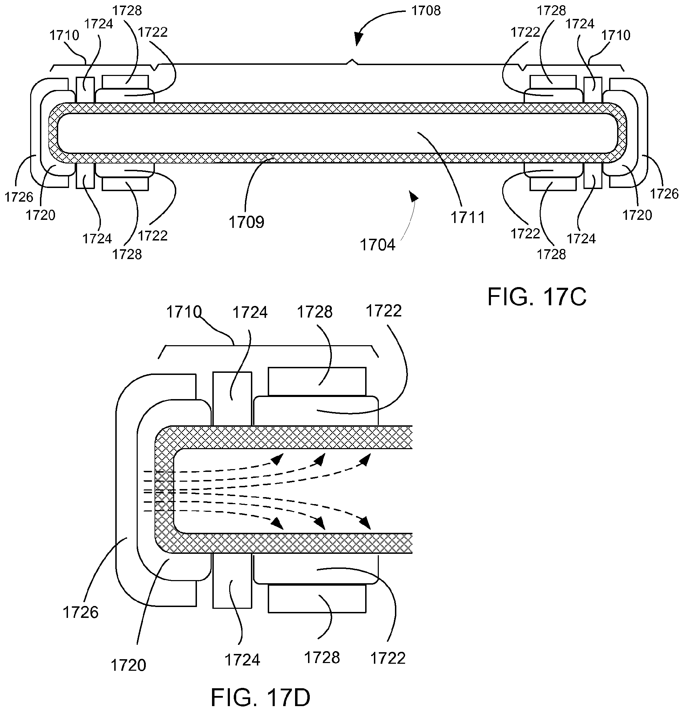

FIGS. 17C illustrates selective strengthening of selected surface portion 1710 of the cover glass 1704 using a second strengthening treatment of electric field assisted ion exchange strengthening in a heated environment, such as an electric furnace. Electrode placement may be chosen so that other surface portion 1708 is substantially unaffected. An anode paste 1720 and a cathode paste 1722 may each have a suitable thickness, for example about one half to about one millimeter, wherein the pastes may comprise KNO3 and AI2O3 and a suitable binder, and may be applied in contact with the cover glass 1704. The anode paste 1720 and cathode paste 1722 may be separate from each other by a suitable mask 1724, for example a high temperature rubber, such as a fluorinated rubber.

A suitable voltage may be approximately within a range from about one hundred volts to about three hundred volts, which may be applied to an anode electrode 1726 (coupled to the anode paste 1720) and to a cathode electrode 1728 (coupled to the cathode paste 1722) for a sufficient period of time, for example, approximately six hours. The anode electrode 1726 and the cathode electrode 1728 may employ a suitable metal. A noble metal such as platinum may be employed, or a temperature-resistant material such as tungsten or molybdenum.

FIG. 17D shows a detailed view of FIG. 17C, to illustrate selective strengthening of selected surface portion 1710 of the cover glass 1704 using the electric field assisted ion exchange strengthening. Notional dashed arrows are shown in FIG 17D to illustrate electric field assisted K+ ion diffusion into the selected surface portion.

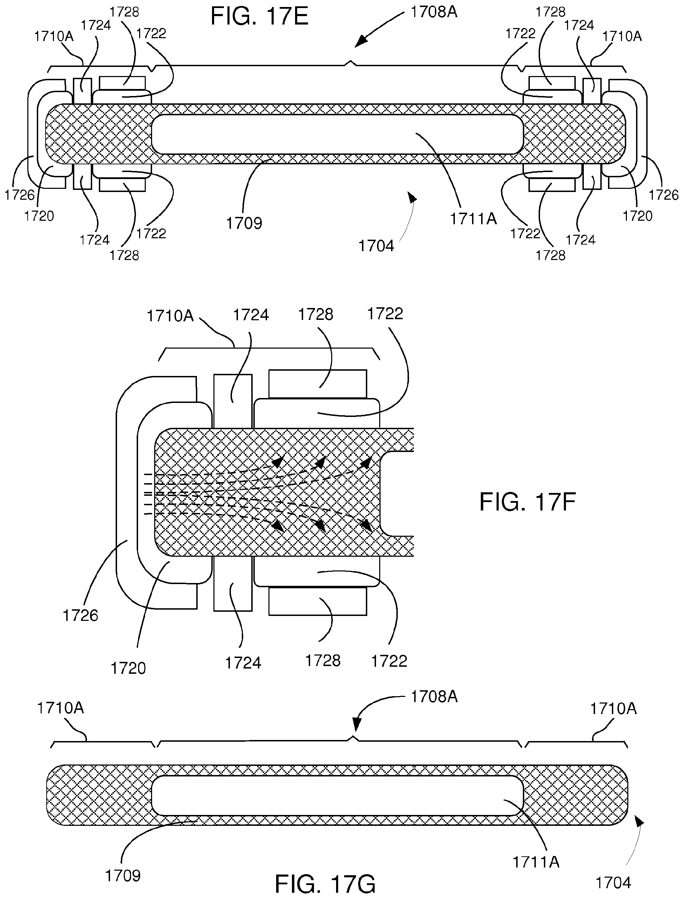

FIG. 17E shows cover glass 1704 after the second strengthening treatment of electric field assisted ion exchange strengthening. FIG. 17F shows a detailed view of FIG. 17E. FIG 17G shows electrodes removed after the second strengthening treatment. Strengthening of selected surface region 171 OA of the cover glass can be selectively enhanced by the second strengthening treatment. Selectively chemically strengthened surface region 171 OA may be substantially affected by undergoing both the first and second strengthening treatment. However, the other chemically strengthened surface region 1708A may be substantially unaffected by the second strengthening treatment. Accordingly, the selectively chemically strengthened surface region 171 OA of the cover glass may have enhanced strengthening that is greater than strengthening of the other chemically strengthened surface region 1708A. In light of the foregoing, it should be understood that the selectively chemically strengthened surface region 171 OA of the cover glass may be strengthened differently than the other chemically strengthened surface region 1708A.

The selectively chemically strengthened surface region 171 OA of the cover glass may have enhanced strengthening with an enhanced depth of compressive layer that is deeper than the depth of compressive layer of the other chemically strengthened surface region 1708A. Comparing FIG. 17C to FIG. 17E (and comparing detailed view 17D to detailed view 17F) for illustration of the effects of the second strengthening treatment, the enhanced, deeper depth of compressive layer of the selectively chemically strengthened surface region 171 OA is highlighted with expanded cross hatching in the selectively chemically strengthened surface region 171 OA. Similarly, a modified central region 171 1 A in FIG. 17E is depicted as smaller, relative to corresponding central region 171 1 in FIG. 17C.

Furthermore, it should be understood that the selectively chemically strengthened surface region 171 OA of the cover glass may have enhanced strengthening, with an enhanced compressive stress that is greater than compressive stress of the other chemically strengthened surface region 1708A. Moreover, the selectively chemically strengthened surface region 171 OA of the cover glass may have enhanced strengthening, with an enhanced central tension that is greater than central tension of the other chemically strengthened surface region 1708A.

FIGS. 18A-18E are simplified cross sectional views showing selective strengthening of cover glass in still yet another example. FIG. 18A shows cover glass 1804 prior to a first strengthening treatment. FIG. 18B shows a cover glass 1804 after the first strengthening treatment, such as treatment in a first heated potassium bath for a first period of time as discussed previously herein.

Compressive surface layer 1809 from undergoing ion exchange is shown using cross hatching. Compressive surface layer 1809 can have a corresponding depth of compressive layer. In some cases, potassium ions may not diffuse into a center portion 181 1 of cover glass 1804. In FIG. 18B the center portion 181 1 is shown without cross hatching.

FIG. 18C shows shielding 1806 of a portion of the cover glass 1804, the shielding 1806 providing the cover glass 1804 with at least one shielded portion 1808 and at least one unshielded portion 1810. Suitable masking 1806 of the cover glass, as discussed previously herein, may be used for the shielding 1806 of the cover glass 1804. For example, as shown in FIG. 18C a bottom major surface of the cover glass may be shielded by applied mask material 1806, so as to provide the shielded portion 1808 of the cover glass. Edge extremities and a top major surface 1810 of the cover glass 1804 may be unshielded portions 1810. Mask 1806 may be suitably patterned as desired for shielded portion 1808 and unshielded portion 1810.

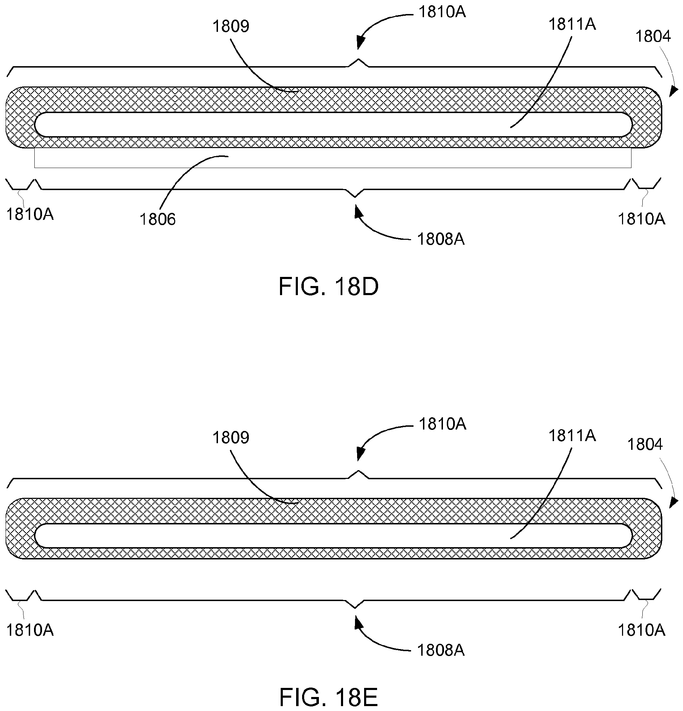

FIG. 18D shows cover glass 1804 after a second strengthening treatment, such as treatment in a second heated potassium bath for a second period of time as discussed previously herein. Strengthening of a selected unshielded portion 181 OA of the cover glass can be selectively enhanced by the second strengthening treatment. Because it is unshielded, unshielded portion 181 OA may be substantially affected by the second strengthening treatment, so as to provide a selectively chemically strengthened surface region 181 OA. Conversely, because it is shielded, shielded portion 1808A of the other chemically strengthened surface region 1808A may be substantially unaffected by the second strengthening treatment. Accordingly, the selectively chemically strengthened surface region 181 OA of the cover glass may have enhanced strengthening that is greater than strengthening of the other chemically strengthened surface region 1808A. In light of the foregoing, it should be understood that the selectively chemically strengthened surface region 181 OA of the cover glass may be strengthened differently than the other chemically strengthened surface region 1808A. After the second strengthening treatment, the shielding 1806 may be removed as shown in FIG. 18E.

In FIGS. 18D and 18E, the selectively chemically strengthened surface region 181 OA of the cover glass may have enhanced strengthening with an enhanced depth of compressive layer that is deeper than the depth of compressive layer of the other chemically strengthened surface region 1808A. Comparing FIG. 18C to FIG. 18D for illustration of the effects of the second strengthening treatment, the enhanced, deeper depth of compressive layer of the selectively chemically strengthened surface region 181 OA is highlighted with expanded cross hatching in the selectively chemically strengthened surface region 181 OA. Similarly, a modified central region 181 1 A in FIG. 18D is depicted as smaller, relative to corresponding central region 181 1 in FIG. 18C.

Furthermore, it should be understood that the selectively chemically strengthened surface region 181 OA of the cover glass may have enhanced strengthening, with an enhanced compressive stress that is greater than compressive stress of the other chemically strengthened surface region 1808A. Moreover, the selectively chemically strengthened surface region 181 OA of the cover glass may have enhanced strengthening, with an enhanced central tension that is greater than central tension of the other chemically strengthened surface region 1808A.

FIG. 19 is a flow diagram illustrating an assembly process 1900 of one example. The assembly process 1900 may begin with obtaining 1902 a cover glass. The assembly process 1900 may continue with shielding 1904 a portion of the cover glass. The shielding may provide the cover glass with at least one shielded portion and at least one unshielded portion. In one
example, such shielding 1904 may involve patterning (or, more particularly, photolithographic patterning) on the cover glass.

The assembly process 1900 may continue with chemically strengthening 1906 the at least one unshielded portion of the cover glass. The at least one unshielded portion of the cover glass may be exposed to ion exchange. The assembly process 1900 may continue with subsequently attaching 1908 the cover glass to the housing. Once the cover glass has been attached to the housing, the assembly process 1900 can end.

FIG. 20 is a flow diagram showing another example of an assembly process 2000. The assembly process 2000 may begin with obtaining 2002 a cover glass. The assembly process 2000 may continue with shielding 2004 a portion of the cover glass. The shielding may provide the cover glass with at least one shielded portion and at least one unshielded portion. In one example, such shielding 2004 may involve patterning (or, more particularly, photolithographic patterning) on the cover glass.

The assembly process 2000 may continue with chemically strengthening 2006 the at least one unshielded portion of the cover glass. The at least one unshielded portion of the cover glass may be exposed to ion exchange. The assembly process 2000 may continue with removing 2008 the shielding. The assembly process 2000 may continue with a second chemical strengthening 2010 of the cover glass. The assembly process 2000 may continue with subsequently attaching 2012 the cover glass to the housing. Once the cover glass has been attached to the housing, the assembly process 2000 can end.

FIG. 21 is a flow diagram showing yet another example of an assembly process 2100. The assembly process 2100 may begin with obtaining 2102 a cover glass. The process 2100 may begin with a first chemical strengthening 2104 of the cover glass. The assembly process 2100 may continue with shielding 2106 a portion of the cover glass. The shielding may provide the cover glass with at least one shielded portion and at least one unshielded portion. In one example, such shielding 2106 may involve patterning (or, more particularly, photolithographic patterning) on the cover glass.

The assembly process 2100 may continue with second chemical strengthening. In particular, the assembly process 2100 may continue with chemically strengthening 2108 the at least one unshielded portion of the cover glass. The at least one unshielded portion of the cover glass may be exposed to ion exchange. The assembly process 2100 may continue with removing 21 10 the shielding. The assembly process 2100 may continue with subsequently attaching 21 12 the cover glass to the housing. Once the cover glass has been attached to the housing, the assembly process 2100 can end.

FIG. 22 is a flow diagram showing still another example of an assembly process 2200. The assembly process 2200 may begin with obtaining 2202 a cover glass. The assembly process 2200 may continue with chemically strengthening 2204 the cover glass. The assembly process 2200 may continue with selectively enhancing 2206 strengthening of a selected portion of the cover glass. The assembly process 2200 may continue with subsequently attaching 2208 the cover glass to the housing. Once the cover glass has been attached to the housing, the assembly process 2200 can end.

FIG. 23 is a perspective view of an electronic device in accordance with another embodiment. As particularly shown in FIG. 23, a selectively chemically strengthened surface region 231 OA may comprise a selectively strengthened edge extremity 231 OA of the cover glass. The selectively chemically strengthened surface region 231 OA may have a width dimension, w, extending inwardly from peripheral edges of the cover glass. In other words, the selectively strengthened edge extremity 231 OA may have a width dimension, w. The width dimension may be about two to five millimeters, or more. For example the width dimension may be about ten millimeters. A notional dashed line in FIG. 23 representatively illustrates an inner extent of the selectively chemically strengthened surface region 231 OA.

Similarly the cover glass may have one or more apertures 2330B, 2330C extending through the cover glass, and one or more aperture edge regions 2310B, 2310C each adjacent to a respective one the apertures 2330B, 2330C. The selectively chemically strengthened surface region may further comprise the aperture edge regions 2310B, 2310C of the cover glass, each a respective width dimension, w.

As noted above, the electronic device can be a handheld electronic device or a portable electronic device. The invention can serve to enable a glass cover to be not only thin but also adequately strong. Since handheld electronic devices and portable electronic devices are mobile, they are potentially subjected to various different impact events and stresses that stationary devices are not subjected to. As such, the invention is well suited for implementation of glass surfaces for handheld electronic device or a portable electronic device that are designed to be thin.

The strengthened glass, e.g., glass covers or cover windows, is particularly useful for thin glass applications. For example, the thickness of a glass cover being strengthened can be between about 0.5 - 2.5 mm. In other embodiments, the strengthening is suitable for glass products whose thickness is not more than 1 mm, or still even thinner than about 0.6 mm.

Chemically strengthening glass, e.g., glass covers or cover windows, can be more effective for edges of glass that are rounded by a predetermined edge geometry having a predetermined curvature (or edge radius) of at least 10% of the thickness applied to the corners of the edges of the glass. In other examples, the predetermined curvature can be between 20% to 50% of the thickness of the glass. A predetermined curvature of 50% can also be considered a continuous curvature, one example of which is illustrated in FIG. 3E.

In one example, the size of the glass cover depends on the size of the associated electronic device. For example, with handheld electronic devices, the size of the glass cover is often not more than five (5) inches (about 12.7 cm) diagonal. As another example, for portable electronic devices, such as smaller portable computers or tablet computers, the size of the glass cover is often between four (4) (about 10.2 cm) to twelve (12) inches (about 30.5 cm) diagonal. As still another example, for portable electronic devices, such as full size portable computers, displays (including televisions) or monitors, the size of the glass cover is often between ten (10) (about 25.4 cm) to twenty (20) inches (about 50.8 cm) diagonal or even larger.

However, it should be appreciated that with larger screen sizes, the thickness of the glass layers may need to be greater. The thickness of the glass layers may need to be increased to maintain planarity of the larger glass layers. While the displays can still remain relatively thin, the minimum thickness can increase with increasing screen size. For example, the minimum thickness of the glass cover can correspond to about 0.3 mm for small handheld electronic devices, about 0.5 mm for smaller portable computers or tablet computers, about 1 .0 mm for full size portable computers, displays or monitors, again depending on the size of the screen. However, more generally, the thickness of the glass cover can depend on the application and/or the size of electronic device.

As discussed above, glass cover or, more generally, a glass piece may be chemically treated such that surfaces of the glass are effectively strengthened. Through such strengthening, glass pieces can be made stronger so that thinner glass pieces can be used with consumer electronic device. Thinner glass with sufficient strength allows for consumer electronic device to become thinner.

The techniques describe herein may be applied to glass surfaces used by any of a variety of electronic devices including but not limited handheld electronic devices, portable electronic devices and substantially stationary electronic devices. Examples of these include any known consumer electronic device that includes a display. By way of example, and not by way of limitation, the electronic device may correspond to media players, mobile phones (e.g., cellular phones), PDAs, remote controls, notebooks, tablet PCs, monitors, all in one computers and the like.

The various aspects, features, embodiments or implementations of the invention described above can be used alone or in various combinations.

Although only a few embodiments of the invention have been described, it should be understood that the invention may be embodied in many other specific forms without departing from the scope of the present invention. By way of example, the steps associated with the methods of the invention may vary widely. Steps may be added, removed, altered, combined, and reordered without departing from the scope of the invention. Similarly, while operations are depicted in the drawings in a particular order, this should not be understood as requiring that such operations be performed in the particular order shown or in sequential order, or that all illustrated operations be performed, to achieve desirable results.

While this specification contains many specifics, these should not be construed as limitations on the scope of the disclosure or of what may be claimed, but rather as descriptions of features specific to particular embodiment of the disclosure. Certain features that are described in the context of separate embodiments can also be implemented in combination. Conversely, various features that are described in the context of a single embodiment can also be implemented in multiple embodiments separately or in any suitable subcombination. Moreover, although features may be described above as acting in certain combinations, one or more features from a claimed combination can in some cases be excised from the combination, and the claimed combination may be directed to a subcombination or variation of a subcombination.

While this invention has been described in terms of several embodiments, there are alterations, permutations, and equivalents, which fall within the scope of this invention. It should also be noted that there are many alternative ways of implementing the methods and apparatuses of the present invention.

## Claims

1. A method for chemically strengthening a piece of glass, the method comprising:
providing a piece of glass, the piece of glass having a first portion and a second portion, the first portion having a first thickness, the second portion having a second thickness, the second thickness being less than the first thickness;
chemically strengthening the first portion to a first level; and
chemically strengthening the second portion to a second level, the second level being less than the first level,
wherein the first thickness of the piece of glass is not more than one (1) mm.

2. A method as recited in claim 1, wherein the chemically strengthening of the first portion operates to strengthen the first portion to the first level, where the first level provides a first predetermined characteristic to the first portion.

3. A method as recited in claim 2, wherein the chemically strengthening of the second portion operates to strengthen the second portion to the second level, where the second level provides a second predetermined characteristic to the second portion.

4. A method as recited in claim 3, wherein the first predetermined characteristic pertains to a first depth of layer for the chemically strengthening of the first portion to the first level, and wherein the second predetermined characteristic pertains to a second depth of layer for the chemically strengthening of the second portion to the second level.

5. A method as recited in claim 3, wherein the first predetermined characteristic pertains to a first central tension limit for the chemically strengthening of the first portion to the first level, and wherein the second predetermined characteristic pertains to a second central tension limit for the chemically strengthening of the second portion to the second level.

6. A method as recited in any of claims 1-5, wherein the second thickness is between 20-70% of the first thickness.

7. A method as recited in claim 1, wherein the chemically strengthening of the first portion comprises:
applying a first mask to the second portion of the piece of glass;
chemically strengthening the first portion and
subsequently removing the first mask from the second portion, and wherein the chemically strengthening of the second portion; comprises:
applying a second mask to the first portion;
chemically strengthening the second portion; and
subsequently removing the second mask from the first portion.

8. A method as recited in claim 7, wherein the chemically strengthening of the first portion comprises placing the piece of glass in a first potassium solution.

9. A method as recited in claim 8, wherein the chemically strengthening of the second portion comprises placing the piece of glass in the first potassium solution or a second potassium solution.

10. A method as recited in any of claims 7-9, wherein the method further comprises:
attaching the piece of glass to a portable electronic device, the piece of glass serving as a portion of an outer surface of a housing for the portable electronic device.

11. A consumer electronic product, comprising:
a housing;
electrical components disposed at least partially internal to said housing; and
a cover glass coupled with the housing, the cover glass being selectively chemically strengthened , wherein the cover glass comprises a first portion and a second portion, the first portion having a first thickness, the second portion having a second thickness, the second thickness being less than the first thickness, and wherein the cover glass is selectively chemically strengthened by chemically strengthening the first portion to a first level, and chemically strengthening the second portion to a second level, the second level being less than the first level, and
wherein the first thickness of the cover glass is not more than one (1) mm.

12. A consumer electronic product as recited in claim 11, wherein:
the selectively chemically strengthened cover glass at the first portion has enhanced strengthening with an enhanced first compressive stress that is greater than a second compressive stress of the cover glass at the second portion.

13. A consumer electronic product as recited in claim 11, wherein:
the selectively chemically strengthened cover glass at the first portion has enhanced strengthening with an enhanced first depth of compressive layer that is deeper than a second depth of compressive layer of the cover glass at the second portion.

14. A consumer electronic product as recited in claim 11, wherein:
the selectively chemically strengthened cover glass at the first portion has enhanced strengthening with an enhanced first central tension that is greater than a second central tension of the cover glass at the second portion.

15. A consumer electronic product as recited in claim 11, wherein the cover glass includes a selectively strengthened surface region, and wherein the selectively chemically strengthened surface region of the cover glass is patterned.

16. A consumer electronic product as recited in any of claims 11-15, wherein the cover glass includes a selectively strengthened surface region, and wherein the selectively chemically strengthened surface region of the cover glass is formed with a photolithographic pattern provided on the cover glass.

17. A consumer electronic product as recited in any of claims 11-15, wherein the cover glass includes a selectively strengthened surface region, and wherein the selectively chemically strengthened surface region comprises an edge extremity of the cover glass.

18. A consumer electronic product as recited in any of claims 11-15, wherein:
the cover glass includes a selectively strengthened surface region;
the cover glass has at least one aperture extending through the cover glass, and an aperture edge region adjacent to the aperture; and
the selectively chemically strengthened surface region comprises the aperture edge region of the cover glass.

19. A consumer electronic product as recited in claim 11, wherein:
the cover glass includes a selectively strengthened surface region;
the cover glass further has a first major surface region that is chemically strengthened; and
the selectively chemically strengthened surface region of the cover glass comprises an opposing second major surface of the cover glass that has enhanced strengthening, which is greater than strengthening of the first major surface of the cover glass.

## Patentansprüche

1. Verfahren zum chemischen Stärken eines Glasstücks, wobei das Verfahren umfasst:
Bereitstellen eines Glasstücks, wobei das Glasstück einen ersten Abschnitt und einen zweiten Abschnitt aufweist, wobei der erste Abschnitt eine erste Dicke aufweist, wobei der zweite Abschnitt eine zweite Dicke aufweist, wobei die zweite Dicke geringer als die erste Dicke ist;
chemisches Stärken des ersten Abschnitts auf eine erste Stufe; und
chemisches Stärken des zweiten Abschnitts auf eine zweite Stufe, wobei die zweite Stufe geringer als die erste Stufe ist,
wobei die erste Dicke des Glasstücks nicht mehr als ein (1) mm beträgt.

2. Verfahren nach Anspruch 1, wobei das chemische Stärken des ersten Abschnitts dazu dient, den ersten Abschnitt auf die erste Stufe zu stärken, wobei die erste Stufe dem ersten Abschnitt eine erste vorbestimmte Eigenschaft verleiht.

3. Verfahren nach Anspruch 2, wobei das chemische Stärken des zweiten Abschnitts dazu dient, den zweiten Abschnitt auf die zweite Stufe zu stärken, wobei die zweite Stufe dem zweiten Abschnitt eine zweite vorbestimmte Eigenschaft verleiht.

4. Verfahren nach Anspruch 3, wobei die erste vorbestimmte Eigenschaft eine erste Schichttiefe für das chemische Stärken des ersten Abschnitts auf die erste Stufe betrifft, und wobei die zweite vorbestimmte Eigenschaft eine zweite Schichttiefe für das chemische Stärken des zweiten Abschnitts auf die zweite Stufe betrifft.

5. Verfahren nach Anspruch 3, wobei die erste vorbestimmte Eigenschaft eine erste zentrale Spannungsgrenze für das chemische Stärken des ersten Abschnitts auf die erste Stufe betrifft, und wobei die zweite vorbestimmte Eigenschaft eine zweite zentrale Spannungsgrenze für das chemische Stärken des zweiten Abschnitts auf die zweite Stufe betrifft.

6. Verfahren nach einem der Ansprüche 1-5, wobei die zweite Dicke zwischen 20-70 % der ersten Dicke beträgt.

7. Verfahren nach Anspruch 1, wobei das chemische Stärken des ersten Abschnitts umfasst:
Aufbringen einer ersten Maske auf den zweiten Abschnitt des Glasstücks;
chemisches Stärken des ersten Abschnitts; und
anschließendes Entfernen der ersten Maske von dem zweiten Abschnitt, und wobei das chemische Stärken des zweiten Abschnitts umfasst:
Aufbringen einer zweiten Maske auf den ersten Abschnitt;
chemisches Stärken des zweiten Abschnitts; und
anschließendes Entfernen der zweiten Maske von dem ersten Abschnitt.

8. Verfahren nach Anspruch 7, wobei das chemische Stärken des ersten Abschnitts das Platzieren des Glasstücks in einer ersten Kaliumlösung umfasst.

9. Verfahren nach Anspruch 8, wobei das chemische Stärken des zweiten Abschnitts das Platzieren des Glasstücks in der ersten Kaliumlösung oder einer zweiten Kaliumlösung umfasst.

10. Verfahren nach einem der Ansprüche 7-9, wobei das Verfahren ferner umfasst: Befestigen des Glasstücks an einer tragbaren elektronischen Vorrichtung, wobei das Glasstück als ein Abschnitt einer Außenfläche eines Gehäuses für die tragbare elektronische Vorrichtung dient.

11. Elektronisches Verbraucherprodukt, umfassend:
ein Gehäuse;
elektrische Komponenten, die zumindest teilweise innerhalb des Gehäuses angeordnet sind; und
ein Deckglas, das mit dem Gehäuse gekoppelt ist, wobei das Deckglas selektiv chemisch gestärkt ist, wobei das Deckglas einen ersten Abschnitt und einen zweiten Abschnitt umfasst, wobei der erste Abschnitt eine erste Dicke aufweist, der zweite Abschnitt eine zweite Dicke aufweist, wobei die zweite Dicke geringer als die erste Dicke ist, und wobei das Deckglas durch chemisches Stärken des ersten Abschnitts auf eine erste Stufe und chemisches Stärken des zweiten Abschnitts auf eine Stufe selektiv chemisch gestärkt ist, wobei die zweite Stufe geringer als die erste Stufe ist, und
wobei die erste Dicke des Deckglases nicht mehr als ein (1) mm beträgt.

12. Elektronisches Verbraucherprodukt nach Anspruch 11, wobei:
das selektiv chemisch gestärkte Deckglas an dem ersten Abschnitt eine verstärkte Stärkung mit einer verstärkten ersten Druckspannung aufweist, die größer als eine zweite Druckspannung des Deckglases an dem zweiten Abschnitt ist.

13. Elektronisches Verbraucherprodukt nach Anspruch 11, wobei:
das selektiv chemisch gestärkte Deckglas an dem ersten Abschnitt eine verstärkte Stärkung mit einer verstärkten ersten Druckschichttiefe aufweist, die tiefer als eine zweite Druckschichttiefe des Deckglases an dem zweiten Abschnitt ist.

14. Elektronisches Verbraucherprodukt nach Anspruch 11, wobei:
das selektiv chemisch gestärkte Deckglas an dem ersten Abschnitt eine verstärkte Stärkung mit einer verstärkten ersten zentralen Spannung aufweist, die größer als eine zweite zentrale Spannung des Deckglases an dem zweiten Abschnitt ist.

15. Elektronisches Verbraucherprodukt nach Anspruch 11, wobei das Deckglas einen selektiv verstärkten Oberflächenbereich umfasst und wobei der selektiv chemisch verstärkte Oberflächenbereich des Deckglases gemustert ist.

16. Elektronisches Verbraucherprodukt nach einem der Ansprüche 11-15, wobei das Deckglas einen selektiv verstärkten Oberflächenbereich umfasst und wobei der selektiv chemisch verstärkte Oberflächenbereich des Deckglases mit einem photolithographischen Muster gebildet ist, das auf dem Deckglas bereitgestellt ist.

17. Elektronisches Verbraucherprodukt nach einem der Ansprüche 11-15, wobei das Deckglas einen selektiv verstärkten Oberflächenbereich umfasst und wobei der selektiv chemisch verstärkte Oberflächenbereich ein Randende des Deckglases umfasst.

18. Elektronisches Verbraucherprodukt nach einem der Ansprüche 11-15, wobei:
das Deckglas einen selektiv verstärkten Oberflächenbereich umfasst;
das Deckglas mindestens eine Öffnung, die sich durch das Deckglas erstreckt, und einen Öffnungsrandbereich angrenzend an die Öffnung aufweist; und
der selektiv chemisch verstärkte Oberflächenbereich den Öffnungsrandbereich des Deckglases umfasst.

19. Elektronisches Verbraucherprodukt nach Anspruch 11, wobei: das Deckglas einen selektiv verstärkten Oberflächenbereich umfasst;
das Deckglas ferner einen ersten Hauptoberflächenbereich aufweist, der chemisch verstärkt ist; und
der selektiv chemisch verstärkte Oberflächenbereich des Deckglases eine gegenüberliegende zweite Hauptoberfläche des Deckglases umfasst, die eine verstärkte Stärkung aufweist, die größer als die Stärkung der ersten Hauptoberfläche des Deckglases ist.

## Revendications

1. Un procédé de renforcement chimique d'une pièce en verre, le procédé comprenant :
l'obtention d'une pièce en verre, la pièce en verre ayant une première partie et une seconde partie, la première partie ayant une première épaisseur, la seconde partie ayant une seconde épaisseur, la seconde épaisseur étant inférieure à la première épaisseur ;
le renforcement chimique de la première partie à un premier niveau ; et
le renforcement chimique de la seconde partie à un second niveau, le second niveau étant inférieur au premier niveau,
dans lequel la première épaisseur de la pièce en verre n'est pas supérieure à un (1) millimètre.

2. Un procédé selon la revendication 1, dans lequel le renforcement chimique de la première partie agit de manière à renforcer la première partie au premier niveau, le premier niveau donnant à la première partie une première caractéristique prédéterminée.

3. Un procédé selon la revendication 2, dans lequel le renforcement chimique de la seconde partie agit de manière à renforcer la seconde partie au second niveau, le second niveau donnant à la seconde partie une seconde caractéristique prédéterminée.

4. Un procédé selon la revendication 3, dans lequel la première caractéristique prédéterminée concerne une première profondeur de couche pour le renforcement chimique de la première partie au premier niveau, et dans lequel la seconde caractéristique prédéterminée concerne une seconde profondeur de couche pour le renforcement chimique de la seconde partie au second niveau.

5. Un procédé selon la revendication 3, dans lequel la première caractéristique prédéterminée concerne une première limite de tension au centre pour le renforcement chimique de la première partie au premier niveau, et dans lequel la seconde caractéristique prédéterminée concerne une seconde limite de tension au centre pour le renforcement chimique de la seconde partie au second niveau.

6. Un procédé selon l'une des revendications 1 à 5, dans lequel la seconde épaisseur est comprise entre 20 et 70 % de la première épaisseur.

7. Un procédé selon la revendication 1, dans lequel le renforcement chimique de la première partie comprend :
l'application d'un premier masque à la seconde partie de la pièce en verre ;
le renforcement chimique de la première partie ; et
ensuite, le retrait du premier masque de la seconde partie, et
dans lequel le renforcement chimique de la seconde partie comprend :
l'application d'un second masque à la première partie ;
le renforcement chimique de la seconde partie ; et
ensuite, le retrait du second masque de la première partie.

8. Un procédé selon la revendication 7, dans lequel le renforcement chimique de la première partie comprend le placement de la pièce en verre dans une première solution de potassium.

9. Un procédé selon la revendication 8, dans lequel le renforcement chimique de la seconde partie comprend le placement de la pièce en verre dans la première solution de potassium ou dans une seconde solution de potassium.

10. Un procédé selon l'une des revendications 7 à 9, dans lequel le procédé comprend en outre :
le montage de la pièce en verre sur un dispositif électronique portable, la pièce en verre faisant fonction d'une partie d'une surface externe de boîtier pour le dispositif électronique portable.

11. Un produit électronique grand public, comprenant :
un boîtier ;
des composants électriques disposés au moins partiellement à l'intérieur dudit boîtier ; et
un verre de fermeture couplé au boîtier, le verre de fermeture étant chimiquement renforcé de manière sélective, le verre de fermeture comprenant une première partie et une seconde partie, la première partie ayant une première épaisseur, la seconde partie ayant une seconde épaisseur, la seconde épaisseur étant inférieure à la première épaisseur, et le verre de fermeture étant chimiquement renforcé de manière sélective par renforcement chimique de la première partie à un premier niveau et renforcement chimique de la seconde partie à un second niveau, le second niveau étant inférieur au premier niveau, et
dans lequel la première épaisseur du verre de fermeture n'est pas supérieure à un (1) millimètre.

12. Un produit électronique grand public selon la revendication 11, dans lequel :
le verre de fermeture chimiquement renforcé de manière sélective au niveau de la première partie présente un renforcement accru avec une première contrainte de compression accrue qui est plus élevée qu'une seconde contrainte de compression du verre de fermeture au niveau de la seconde partie.

13. Un produit électronique grand public selon la revendication 11, dans lequel :
le verre de fermeture chimiquement renforcé de manière sélective au niveau de la première partie possède un renforcement accru avec une première profondeur accrue de couche de compression qui est plus élevée qu'une seconde profondeur de couche de compression du verre de fermeture au niveau de la seconde partie.

14. Un produit électronique grand public selon la revendication 11, dans lequel :
le verre de fermeture chimiquement renforcé de manière sélective au niveau de la première partie possède un renforcement accru avec une première tension au centre accrue qui est plus élevée qu'une seconde tension au centre du verre de fermeture au niveau de la seconde partie.

15. Un produit électronique grand public selon la revendication 11, dans lequel le verre de fermeture comprend une région de surface renforcée de manière sélective, et dans lequel la région de surface chimiquement renforcée de manière sélective du verre de fermeture est structurée.

16. Un produit électronique grand public selon l'une des revendications 11 à 15, dans lequel le verre de fermeture comprend une région de surface renforcée de manière sélective, et dans lequel la région de surface chimiquement renforcée de manière sélective du verre de fermeture est formée avec une structuration photolithographique réalisée sur le verre de fermeture.

17. Un produit électronique grand public selon l'une des revendications 11 à 15, dans lequel le verre de fermeture comprend une région de surface renforcée de manière sélective, et dans lequel la région de surface chimiquement renforcée de manière sélective comprend une extrémité de bord du verre de fermeture.

18. Un produit électronique grand public selon l'une des revendications 11 à 15, dans lequel :
le verre de fermeture comprend une région de surface renforcée de manière sélective ;
le verre de fermeture possède au moins une ouverture s'étendant au travers du verre de fermeture, et une région de bord d'ouverture adjacente à l'ouverture ; et
la région de surface chimiquement renforcée de manière sélective comprend la région de bord d'ouverture du verre de fermeture.

19. Un produit électronique grand public selon la revendication 11, dans lequel :
le verre de fermeture comprend une région de surface renforcée de manière sélective ;
le verre de fermeture possède en outre une première région de surface majeure qui est chimiquement renforcée ; et
la région de surface chimiquement renforcée de manière sélective du verre de fermeture comprend une seconde région de surface majeure, opposée, du verre de fermeture qui possède un renforcement accru qui est supérieur au renforcement de la première surface majeure du verre de fermeture.
